# EUROPÄISCHE PATENTSCHRIFT

(11) **EP 2 214 511 B1**
(45) Veröffentlichungstag und Bekanntmachung des Hinweises auf die Patenterteilung: **02.05.2012**
(21) Anmeldenummer: 08802772.7
(22) Anmeldetag: 02.10.2008
(51) Int. Cl.: A23L 1/015, A23J 1/00, A23J 3/14, A23J 1/14, A23L 1/211

(54) **ENTFERNUNG UNERWÜNSCHTER BEGLEITSTOFFE AUS PFLANZENPROTEINEXTRAKTEN**
ELIMINATION OF UNWANTED ACCOMPANYING SUBSTANCES FROM VEGETABLE PROTEIN EXTRACTS
ÉLIMINATION DE SUBSTANCES ASSOCIÉES INDÉSIRABLES DANS DES EXTRAITS DE PROTÉINES VÉGÉTALES

(30) Priorität: 04.10.2007 DE 102007047341; 05.10.2007 DE 102007047764
(43) Veröffentlichungstag der Anmeldung: 11.08.2010
(73) Patentinhaber: Süd-Chemie AG, 80333 München (DE); Fraunhofer-Gesellschaft zur Förderung der angewandten Forschung e.V., 80686 München (DE)
(72) Erfinder: RUF, Friedrich, 84184 Ast (DE); SOHLING, Ulrich, 85356 Freising (DE); HASENKOPF, Katrin, 85354 Freising (DE); EISNER, Peter, 85354 Freising (DE); MÜLLER, Klaus, 85356 Freising (DE); PICKARDT, Claudia, 85354 Freising (DE); BEZ, Jürgen, 80687 München (DE)
(74) Vertreter: Stolmár Scheele & Partner
(86) Internationale Anmeldenummer: PCT/EP2008/008384
(87) Internationale Veröffentlichungsnummer: WO 2009/043586

(56) Entgegenhaltungen:
- EP-A- 0 979 806
- WO-A-01/45521
- WO-A-2008/056977
- WO-A-2008/118772
- DE-A1- 2 627 613
- INOUYE ET AL.: "deodorizationof soybean proteins by enzymatic and physicochemical treatments" JOURNAL OF AGRICULTURAL AND FOOD CHEMISTRY, Bd. 50, Nr. 6, 2002, Seiten 1652-1658, XP002539656
- DATABASE WPI Week 198713 Thomson Scientific, London, GB; AN 1987-090302 XP002539658 & JP 62 040261 A (SHOKUHIN SANGYO MAKU RIYO GIJUTSU) 21. Februar 1987 (1987-02-21)
- SESSA ET AL.: "effect of heat on the adsorption capacity of an activated carbon for decolorizing/deodorizing yellow zein" BIORESSOURCE TECHNOLOGY, Bd. 99, Nr. 14, 29. Januar 2008 (2008-01-29), Seiten 6360-6364, XP002539657

## Beschreibung

Die Erfindung betrifft ein Verfahren zur Entfernung unerwünschter Begleitstoffe; insbesondere Aroma-, Geschmacks- und/oder Farbkomponenten aus Pflanzenproteinextrakten, sowie die Verwendung anorganischer Adsorbermaterialien zur Entfernung unerwünschter Begleitstoffe, insbesondere Aroma-, Geschmacks-und/oder Farbkomponenten aus Pflanzenproteinextrakten.

### Hintergrund der Erfindung

Die Verwendung pflanzlicher Proteine in Lebensmitteln anstelle von tierischen Rohstoffen, wie Ei oder Milch, gewinnt zunehmend an Bedeutung. Pflanzenproteine zeigen bei einer Vielzahl von Lebensmittelanwendungen sehr gute technofunktionelle Eigenschaften. Proteinpräparate aus Rohstoffen, wie Soja, Lupine, Sonnenblume, Raps oder anderen proteinhaltigen Pflanzensaaten, kommen in Lebensmitteln zum Beispiel als Wasserbinder, Ölbinder, Gelbildner, Emulgator oder Schaumbildner zum Einsatz. Auch aus ernährungsphysiologischen Gründen sind Pflanzenproteine sehr wertvoll und können Lebensmittel gesundheitlich aufwerten. Außerdem eignen sich Pflanzenproteine zum Einsatz in Pet Food (Heimtiernahrung). Pflanzenproteine dienen hierbei zur Verbesserung von Struktur und Textur und zur kostengünstigen Proteinanreicherung.

Pflanzenproteine lassen sich beispielsweise durch wässrige Extraktion aus pflanzlichen Rohstoffen gewinnen. Aus dem wässrigen Extrakt lassen sich die Pflanzenproteine beispielsweise durch eine Änderung des pH-Wertes ausfällen und als Pflanzenproteinkonzentrat abtrennen.

Allerdings weisen die so gewonnenen Pflanzenproteinkonzentrate oft ein typisches, markantes Aromaprofil auf, das für Lebensmittelanwendungen und Pet Food unerwünscht ist. So besitzen Proteinextrakte aus Leguminosen, wie Soja, Erbse oder Lupine, ein Leguminosen-typisches Aroma, das von Testpersonen bei der sensorischen Verkostung als grasig, bohnig, erbsig oder grün beschrieben wird. Raps und Sonnenblume erzeugen oft bittere und adstringierende Geschmackseindrücke. Außerdem reagieren die oft mit den Proteinen assoziierten Polyphenole mit den Proteinen und verändern so Farbe und Qualität der Pflanzenproteinkonzentrate negativ.

Der Grund für diese Aromafehler liegt im Vorhandensein von sekundären Pflanzenstoffen, wie Polyphenolen, Phytinsäure und Alkaloiden. Außerdem entstehen durch Fettabbau-Reaktionen eine Vielzahl von Aldehyden und Ketonen, die für viele Aromafehler verantwortlich sein sollen.

Es wurde mit verschiedenen Verfahren versucht, diese störenden Begleitstoffe, insbesondere Aroma-, Geschmacks- und/oder Farbkomponenten, von den extrahierten Pflanzenproteinen abzutrennen oder deren Aroma zu maskieren.

Übliche Verfahren zur Entfernung unerwünschter Begleitstoffe aus Pflanzenproteinkonzentraten sind Extraktions- und Waschschritte. Dabei werden lösliche Komponenten unter Bedingungen, bei denen die Proteine möglichst schlecht löslich sind, aus dem Pflanzenproteinkonzentrat extrahiert. Die Extraktion kann mit wässrigen, mit wässrig-alkoholischen oder mit organischen Lösungsmitteln erfolgen. Ein Nachteil besteht darin, dass meist mehrere Extraktionsstufen nötig sind, um die unerwünschten Begleitstoffe in ausreichendem Maß abzutrennen. Dadurch wird das Verfahren sehr aufwändig und kostenintensiv. Außerdem sind große Mengen an Wasser/Lösungsmittel erforderlich. In wässrigen Systemen ist die Löslichkeit der sekundären Pflanzenstoffe oft relativ gering, so dass die Abreicherung sehr schlecht ist. Außerdem gehen bei der Abtrennung störender Begleitstoffe auch relativ große Mengen an Protein verloren. Bei Extraktionen mit Alkohol und anderen Lösungsmitteln fallen für die Ausstattung der Anlagen im Explosionsschutzbetrieb hohe Kosten an.

Um die Löslichkeit von phenolischen Verbindungen in wässrigen Systemen zu verbessern, kann eine enzymatische Hydrolyse der phenolischen Verbindungen vorgeschaltet werden (WO 96/39859). Aufgrund der Kosten für die Enzyme wird das Verfahren jedoch noch sehr viel teurer.

Zur Abtrennung niedrigmolekularer Verbindungen werden außerdem Filtrationsverfahren eingesetzt. Durch Ultrafiltration können beispielsweise Begleitstoffe von Soja abgetrennt werden. Diese Trennmethode ist jedoch sehr kostenintensiv und langwierig. Die für die Filtration verwendeten Membranen verstopfen leicht, was den Durchfluss stark verlangsamt oder sogar eine Regeneration der Membranen nötig macht. Durch die lange Dauer des Filtrationsvorgangs ist auch das Risiko von unerwünschtem Keimwachstum sehr groß. Außerdem sind viele Begleitstoffe relativ stark an das Protein gebunden und verbleiben oft im Retentat. Sehr langes Waschen wäre dann nötig. Dies verlängert jedoch den Prozess weiter und verstärkt die genannten Probleme.

In EP 1 512 324 A1 wird Soja bei pH 9 - 12 behandelt, um Begleitstoffe vom Protein abzulösen. Dieser hohe pH-Wert bewirkt jedoch nachteilig, dass das Protein bereits teilweise hydrolysiert wird, was dessen technologische Eigenschaften stark beeinflusst. Außerdem kann es unter diesen Bedingungen auch bei entöltem Material zur Verseifung von Restfett kommen, was die Sensorik des erhaltenen Proteinkonzentrats sehr verschlechtert.

Ein weiteres Verfahren zur Entfernung unerwünschter Begleitstoffe, insbesondere Aroma-, Geschmacks- und/oder Farbkomponenten, welche bei der Oxidation von Fetten entstehen, ist die Behandlung des Proteinextrakts mit heißem Wasserdampf, dem so genannten Steam Stripping (EP 0 124 165). Der Proteinextrakt wird dabei in einer dünnen Schicht vorgelegt. Dieser Prozess ist jedoch apparativ sehr aufwändig und entfernt nur wasserdampfflüchtige Aromakomponenten.

Ein weiterer Ansatz zur Entfernung unerwünschter Begleitstoffe aus Proteinextrakten ist deren Abtrennung mittel adsorptiver Verfahren. Oft wird Aktivkohle als bekanntermaßen sehr wirksamer Adsorber verwendet (DE 02627613). Allerdings ist es kaum mehr möglich, die Aktivkohle quantitativ aus den Extrakten abzutrennen. Durch die dadurch verursachte schwarze Verfärbung ist die Verwendung derartiger Pflanzenproteinkonzentrate auf wenige Einsatzmöglichkeiten begrenzt.

Außerdem wird die Verwendung organischer Adsorberharze (WO 93/21937) sowie spezieller organischer Moleküle (Singh et al., J. Agric. Food Chem., 1997, 45, 4522) beschrieben. Diese Substanzen sind zwar erfolgreich in der Abtrennung spezieller Inhaltsstoffe, wirken allerdings nur sehr spezifisch auf bestimmte Strukturen, sind sehr teuer und schwer zu entsorgen.

Die WO 01/45521 A2 betrifft ein Verfahren zur Gewinnung von Maisprotein (Zein) aus Mais unter Verwendung von Ethanol als Lösungsmittel. Das Verfahren umfasst die Schritte der alkoholischen Extraktion des Maisproteins von einem Maisprotein-enthaltenden Substrat durch Inkontaktbringen des flüssigen Ethanols mit dem Substrat, um Kohlehydrate und andere Unreinheiten von dem Substrat zu entfernen. Desweiteren werden suspendierte Feststoffe aus dem Maisproteinextrakt entfernt, um eine Rohmaisproteinfraktion zu erhalten. Schließlich wir diese Rohmaisproteinfraktion durch Kontaktieren mit einem Adsorbens von weiteren Verunreinigungen, wie beispielsweise Öl, Asche oder Farbstoffe weiter aufgereinigt. Als Adsorbens wird bevorzugt Aktivkohle eingesetzt.

Die EP 0979806 A1 betrifft ein Verfahren zur selektiven Anreicherung und Trennung sowie Aufreinigung aromawirksamer Moleküle aus wässrigen oder organischen Lösungen durch Adsorption an zeolithischen Materialien. Bevorzugt werden saure Zeolithe. Das Inkonktaktbringen der Zeolithe mit der Lösung erfolgt im neutralen oder sauren pH Bereich. Das Verfahren kann zudem noch eine zweite Adsorptionsstufe umfassen, bei der als Adsorbentien organische Kationenaustauscher oder anorganische Adsorbentien (wie Zeolithe) eingesetzt werden.

Die DE 2627613 A1 betrifft ein Verfahren zur Herstellung eines von Verunreinigungen befreiten Proteinextrakts oder Proteinprodukts aus Ölsaaten. In dem beschriebenen Verfahren wird das gemahlene Ölsaatgut mit einem alkalischen

Extraktionsmittel extrahiert und das Extrakt anschließend mit Aktivkohle behandelt.

Inouye K. et al beschreibt in "Deodorization of soybean proteins by enzymatic and physicochemical treatments" ein Verfahren zur Entfernung von Geruchssubstanzen aus Sojaproteinisolat unter Verwendung verschiedener Arten von festen Adsorbentien bei denen es sich um Polystyrene, Polymethacrylate, Zeolithe und Holzkohle handeln kann.

Die JP 1987-090302 beschreibt die Filterung von säurebehandelten Proteinen oder Sojasauce mit Hilfe eines Adsorbens wie z.B. Aktivkohle oder Harzpartikeln.

Die beschriebenen Verfahren bewirken eine Abreicherung von Pflanzenproteinextrakten an unerwünschten Begleitstoffen und tragen zur Sensorikverbesserung der Pflanzenproteinkonzentrate bei. Allerdings sind diese Verfahren, insbesondere wässrigextraktive Verfahren, oft nicht effektiv genug und die Produkte weisen immer noch nicht die geforderte geschmackliche und geruchliche Neutralität auf. Andere bekannte Verfahren sind zwar effektiver als die im vorstehenden Stand der Technik beschriebenen. Bei diesen Verfahren ist der apparative Aufwand aber entweder sehr groß und damit das Verfahren sehr teuer, oder die Entsorgung der verwendeten Chemikalien ist problematisch.

### Beschreibung der Erfindung

Aufgabe der vorliegenden Erfindung war es daher, ein Verfahren zur Entfernung unerwünschter Begleitstoffe, insbesondere Aroma-, Geschmacks- und/oder Farbkomponenten, aus Pflanzenproteinextrakten zur Verfügung zu stellen, mit welchen aus pflanzlichen Rohstoffen sensorisch neutrale und ansprechende Proteinkonzentrate hergestellt werden können. Die mit dem Verfahren erhaltenen Pflanzenproteinkonzentrate sollen sich zum Einsatz in Lebensmitteln und Haustiernahrung eignen, wobei diese Proteinkonzentrate auch in höheren Konzentrationen einsetzbar sein sollen, ohne dass sensorische Beeinträchtigungen in Kauf genommen werden müssen.

Diese Aufgabe wird durch ein Verfahren mit den Merkmalen des Patentanspruchs 1 gelöst. Vorteilhafte Ausführungsformen des erfindungsgemäßen Verfahrens sind Gegenstand der abhängigen Ansprüche.

Erfindungsgemäß werden zur Entfernung unerwünschter Begleitstoffe, insbesondere Aroma-, Geschmacks- und/oder Farbkomponenten, aus Pflanzenproteinextrakten anorganische Adsorbermaterialien verwendet. Es wurde gefunden, dass durch die Verwendung derartiger anorganischer Adsorbermaterialien störende Begleitstoffe mit hoher Selektivität aus Pflanzenproteinextrakten entfernt werden können, ohne dass dabei hohe Proteinverluste in Kauf genommen werden müssen.

Die vorliegende Erfindung betrifft somit ein Verfahren zur Entfernung unerwünschter Begleitstoffe, insbesondere Aroma-, Geschmacks- und/oder Farbkomponenten, aus Pflanzenproteinextrakten, zumindest umfassend die folgenden Schritte:
i. Extraktion eines pflanzlichen Rohstoffs mit einem Extraktionsmittel, wobei ein Pflanzenproteinextrakt erhalten wird;
ii. Zugabe eines anorganischen Adsorbermaterials zu dem Pflanzenproteinextrakt, wobei unerwünschte Begleitstoffe, insbesondere Aroma-, Geschmacks- und/oder Farbkomponenten an das anorganische Adsorbermaterial gebunden werden wobei das Adsorbermaterial ausgewählt ist aus Tonen ausgewählt aus der Gruppe bestehend aus anionischen Tonen ausgewählt aus Vermiculiten, kationischen Tonen ausgewählt aus Hydrotalcit, insbesondere synthetischer Hydrotalcit und ungeladenen Tonen ausgewählt aus der Gruppe bestehend aus Kerolith und Mineralien der Talkgruppe wie insbesondere Talk, Chlorit.

Beim erfindungsgemäßen Verfahren wird zunächst ein pflanzlicher Rohstoff mit einem Extraktionsmittel extrahiert. Als pflanzlicher Rohstoff kann an sich jeder pflanzliche Rohstoff verwendet werden. Bevorzugt werden pflanzliche Rohstoffe verwendet, die einen hohen Anteil an Pflanzenproteinen enthalten. Es können sowohl Pflanzen selbst verwendet werden, als auch Abfälle, die bei der Verarbeitung von Pflanzen anfallen. Ein geeigneter pflanzlicher Rohstoff ist beispielsweise ein Presskuchen, wie er bei der Ölgewinnung aus Pflanzensamen anfällt. Die bevorzugt eingesetzten pflanzlichen Rohstoffe weisen eine Trockenmasse von mehr als 80 Gew.-%, bevorzugt mehr als 90 Gew.-%, insbesondere bevorzugt im Bereich von 90 bis 95 Gew.-% auf, bezogen auf ds Gewicht des pflanzlichen Rohstoffs. Die bevorzugt eingesetzten pflanzlichen Rohstoffe weisen also einen niedrigen Wassergehalt auf. Die Trockenmasse des pflanzlichen Rohstoffs entspricht bei diesen pflanzlichen Rohstoffen also in erster Näherung dem Gewicht des pflanzlichen Rohstoffs.

Der pflanzliche Rohstoff wird dann mit einem Extraktionsmittel extrahiert. Als Extraktionsmittel werden bevorzugt Lösungsmittel verwendet, die sich rückstandsfrei entfernen lassen oder die beim Verzehr durch Mensch oder Tier keine schädliche Wirkung entfalten. Ein bevorzugtes Lösungsmittel ist Wasser. Es können aber auch andere Lösungsmittel verwendet werden, beispielsweise Alkohole, wie Ethanol. Es können auch Gemische von Lösungsmitteln verwendet werden, wie Gemische aus Wasser und Alkohol, insbesondere Ethanol. Zur Erhöhung des Extraktionsgrades können dem Extraktionsmittel auch Hilfsstoffe beigefügt werden. So kann bei Verwendung von Wasser als Extraktionsmittel beispielsweise der pH-Wert eingestellt werden, beispielsweise durch Verwendung eines geeigneten Puffersystems, oder auch die Salzkonzentration, beispielsweise durch Zugabe von Natriumchlorid, sodass die Löslichkeit der Pflanzenproteine in Wasser erhöht und eine vorzeitige Denaturierung vermieden wird. Bevorzugt wird das Extraktionsmittel, insbesondere Wasser, auf einen pH-Wert > 6, besonders bevorzugt > 7, insbesondere im einem Bereich bis zu pH 9, insbesondere bevorzugt in einem Bereich bis zu 8 eingestellt. Sofern das Extraktionsmittel ein Salz enthält, wird die Konzentration des Salz bevorzugt so eingestellt, dass eine 0,1 bis 3-molare, bevorzugt 0,5 bis 2,5-molare, besonders bevorzugt 1 bis 2-molare Lösung des Salzes im Extraktionsmittel erhalten wird.

Die Menge des anorganischen Adsorbermaterials wird bevorzugt gering gewählt, um eine unerwünschte Adsorption von Pflanzenproteinen am anorganischen Adsorbermaterial zurückzudrängen. Bevorzugt ist eine Menge von zumindest 0,5 Gew.-%, besonders bevorzugt zumindest 1 Gew.-%, bezogen auf das Gewicht des pflanzlichen Rohstoffs, ausreichend, um eine zufrieden stellende Entfernung unerwünschter Begleitstoffe aus dem Pflanzenproteinextrakt zu erreichen. Es sollten keine zu hohen Mengen an anorganischem Adsorbermaterial verwendet werden. Bevorzugt wird die Menge des anorganischen Adsorbermaterials kleiner als 20 Gew.-%, bevorzugt kleiner als 10 Gew.-% gewählt, bezogen auf bezogen auf das Gewicht des pflanzlichen Rohstoffs.

Der Pflanzenproteinextrakt wird bevorzugt auf einen Trockenmasse im Bereich von 0,1 bis 50 Gew.-%, besonders bevorzugt 1 bis 40 Gew.-%, insbesondere bevorzugt 2 bis 30 Gew.-%. Die Trockenmasse bezieht sich dabei auf die im Pflanzenproteinextrakt gelösten Bestandteile.

Die mit den erfindungsgemäßen Verfahren erhaltenen Proteinkonzentrate sind sensorisch deutlich neutraler als Proteinkonzentrate, die ohne Adsorption störender Begleitstoffe an anorganischen Adsobermaterialien hergestellt wurden. Beispielsweise wurden mit anorganischen Adsorbermaterialien behandelte Sojaproteinextrakte bei der sensorischen Beurteilung im Vergleich zu Pflanzenproteinextrakten, die keine adsorptive Behandlung erfahren hatten, signifikant weniger als bitter, bohnig und grasig/grün beurteilt. Außerdem konnte durch die oben genannte Behandlung mit anorganischen Adsorbermaterialien Rapsprotein hergestellt werden, das praktisch frei von Sinapin war und Sinapinsäure nur noch in geringer Konzentration enthielt.

Das anorganische Adsorbermaterial kann bereits zum Pflanzenproteinextrakt zugegeben werden, wenn dieser noch den pflanzlichen Rohstoff enthält. Allerdings wurde bei einigen Anwendungen eine gleichzeitige Abreicherung des Pflanzenproteinextraktes an Pflanzenproteinen bzw. eine deutliche Adsorption der Pflanzenproteine am anorganischen Adsorbermaterial beobachtet. Bevorzugt wird das erfindungsgemäße Verfahren daher in der Weise durchgeführt, dass unlösliche Bestandteile aus dem Pflanzenproteinextrakt entfernt werden. Die Entfernung der unlöslichen Bestandteile, die insbesondere auf den pflanzlichen Rohstoff zurückgehen, kann mit üblichen Verfahren erfolgen, beispielsweise durch Zentrifugieren, Filtration oder Abgießen des Pflanzenproteinextrakts, sodass die unlöslichen Bestandteile des pflanzlichen Rohstoffs zurückbleiben.

Das zur Abtrennung unerwünschter Begleitstoffe zum Pflanzenproteinextrakt zugegebene anorganische Adsorbermaterial kann im Pflanzenproteinextrakt verbleiben. Dies ist beispielsweise möglich, wenn der Pflanzenproteinextrakt zur Herstellung von Futtermitteln verwendet wird. Gemäß einer Ausführungsform des erfindungsgemäßen Verfahrens wird das anorganische Adsorbermaterial jedoch vom Pflanzenproteinextrakt abgetrennt. Zur Abtrennung können übliche Verfahren verwendet werden, wie Zentrifugieren, Filtration oder Abdekantieren.

Der Pflanzenproteinextrakt kann als solches verwendet werden, d.h. in Form einer beim Verfahren erhaltenen Lösung der Pflanzenproteine im Extraktionsmittel. Ggf. kann der Proteingehalt durch Zugabe oder Entfernen von Lösungsmittel, insbesondere Wasser, auf einen gewünschten Gehalt eingestellt werden.

Gemäß einer Ausführungsform kann das Pflanzenprotein jedoch auch aus dem Pflanzenproteinextrakt abgetrennt werden. Dazu können ebenfalls übliche Verfahren verwendet werden. Beispielsweise kann das Extraktionsmittel, insbesondere Wasser, abdestilliert oder durch Gefriertrocknen oder Sprühtrocknen entfernt werden. Es ist aber auch möglich, das Protein auszufällen oder an einem geeigneten weiteren Träger zu adsorbieren und dann mit üblichen Verfahren vom Extraktionsmittel abzutrennen.

Gemäß bevorzugten Ausführungsformen umfasst das vorstehend beschriebene erfindungsgemäße Verfahren einen oder mehrere Schritte ausgewählt aus der Gruppe von:
i. Abtrennung unlöslicher Bestandteile des pflanzlichen Rohstoffs vom Pflanzenproteinextrakt;
ii. Abtrennung des anorganischen Adsorbermaterials von dem Pflanzenproteinextrakt;
iii. Abtrennung von Pflanzenprotein aus dem Pflanzenproteinextrakt;
iv. Aufschließen des pflanzlichen Rohstoffs, insbesondere durch Schälen, Mahlen und/oder Flockieren;
v. Vorextraktion des pflanzlichen Rohstoffs, bevorzugt ein- bis sechsmal, besonders bevorzugt einbis dreimal,
   - bevorzugt in der 5 bis 10-fachen Menge Wasser bei sauren pH-Werten, weiter bevorzugt nahe am isoelektrischen Punkt, besonders bevorzugt bei pH ≤ 5, und/oder
   - bevorzugt bei kalten Temperaturen, besonders bevorzugt bei Temperaturen ≤ 10 °C,
   - und Abtrennung des Feststoffes von der flüssigen Phase nach jedem Vorextraktionsschritt;
vi. mehrmalige Wiederholung der Zugabe des anorganischen Adsorbermaterials zu dem Pflanzenproteinextrakt, vorzugsweise ein- bis 3-mal;
vii. Neutralisation des ausgefällten Proteinkonzentrats.

Durch das Aufschließen der pflanzlichen Rohstoffe werden die in diesen enthaltenen Pflanzenproteinen leichter zugänglich und lassen sich daher leichter aus den pflanzlichen Rohstoffen herauslösen. Beim Aufschließen der pflanzlichen Rohstoffe wird deren Struktur zerstört oder beschädigt und auch deren Zellen zumindest teilweise aufgebrochen. Im einfachsten Fall kann das Aufschließen des pflanzlichen Rohstoffs beispielsweise das Schälen von Pflanzensamen umfassen. Der pflanzliche Rohstoff kann aber auch gequetscht oder gepresst werden. Ferner ist es auch möglich, den pflanzlichen Rohstoff zu mahlen, sodass ein Pulver erhalten wird, das eine hohe Oberfläche aufweist, aus welchem dann vom Extraktionsmittel das gewünschte Pflanzenprotein herausgelöst werden kann. Es ist aber auch möglich, den pflanzlichen Rohstoff in größere Bruchstücke zu zerreißen. Ziel dieser Verfahren ist, das im aufgeschlossenen pflanzlichen Rohstoff enthaltene Pflanzenprotein für das Extraktionsmittel besser zugänglich zu machen.

Um vor der Durchführung des erfindungsgemäßen Verfahrens bereits einen Anteil der störenden Begleitstoffe aus dem pflanzlichen Rohstoff zu entfernen, kann gemäß einer Ausführungsform des Verfahrens der pflanzliche Rohstoff auch vorextrahiert werden. Zur Vorextraktion kann das gleiche Extraktionsmittel verwendet werden, wie bei der Herstellung des im erfindungsgemäßen Verfahren eingesetzten Pflanzenproteinextrakts. Es ist aber auch möglich, ein anderes Extraktionsmittel einzusetzen. Beispielsweise kann für die Vorextraktion ein wässriges Extraktionsmittel eingesetzt werden, das auf einen anderen pH-Wert eingestellt ist, als das für die Herstellung des Pflanzenproteinextrakts verwendete wässrig Extraktionsmittel. Für die Vorextraktion werden bevorzugt Bedingungen verwendet, bei denen das Pflanzenprotein nur in geringem Maß mit extrahiert wird. So wird bevorzugt nur eine geringe Menge an Extraktionsmittel verwendet, bevorzugt die 5 bis 10-fache Menge an Wasser bezogen auf das Gewicht des pflanzlichen Rohstoffs. Die Vorextraktion wird bevorzugt mit einem wässrigen Extraktionsmittel durchgeführt, das einen sauren pH-Wert aufweist, besonders bevorzugt einen pH-Wert von ≤ 5. Insbesondere wird das für die Vorextraktion verwendete Extraktionsmittel auf einen pH-Wert eingestellt, der nahe dem isoelektrischen Punkt des Pflanzenproteins liegt. Weiter wird die Vorextraktion bevorzugt bei kalten Temperaturen durchgeführt, bei welchen die Löslichkeit des Pflanzenproteins niedrig ist. Bevorzugt wird die Temperatur ≤ 10 °C gewählt. Wird die Vorextraktion mehrmals wiederholt, wird der pflanzliche Rohstoff bevorzugt nach jeder Vorextraktion vom Extraktionsmittel abgetrennt, sodass die nächste Vorextraktion mit frischem Extraktionsmittel durchgeführt werden kann.

Die Abtrennung der unerwünschten Begleitstoffe kann ein- oder mehrmals wiederholt werden. Dazu wird das anorganische Adsorbermaterial bevorzugt jeweils vom Pflanzenproteinextrakt abgetrennt und anschließend frisches anorganisches Adsorbermaterial zum Pflanzenproteinextrakt gegeben.

Sofern das Pflanzenprotein aus dem Pflanzenproteinextrakt ausgefällt wurde, kann dieses gemäß einer Ausführungsform auch neutralisiert werden, beispielsweise durch Zugabe von Säure oder Lauge.

Das erfindungsgemäße Verfahren beinhaltet in einer Ausführungsform zumindest einen der folgenden Schritte:
1. der Pflanzenproteinextrakt wird auf einen pH-Wert im Bereich von 3 - 10, bevorzugt 5 - 9, weiter bevorzugt ≥ 6 und besonders bevorzugt 6 - 8 eingestellt;
2. die Abtrennung des anorganischen Adsorbermaterials erfolgt auf mechanischem Wege, insbesondere durch Zentrifugieren oder Filtrieren;
3. die Konzentration des anorganischen Adsorbermaterials beträgt 0,1 - 20 Gew.-%, bevorzugt 0,1 - 10 Gew.-%, weiter bevorzugt 0,5 - 5 Gew.-%, bezogen auf das Gewicht des eingesetzten pflanzlichen Rohstoffs;
4. die Abtrennung des anorganischen Adsorbermaterials erfolgt auf mechanischem Wege, insbesondere durch Zentrifugieren oder Dekantieren; und/oder
5. die Abtrennung des Proteins erfolgt durch
   i) Ausfällung des gelösten Proteins aus der Lösung, bevorzugt nahe am isoelektrischen Punkt des Pflanzenproteins, besonders bevorzugt bei einem pH-Wert < 7;
   ii) Fest/Flüssig-Trennung des gefällten Proteins vom Überstand;
   iii) Trocknung des Pflanzenproteinextrakts, bevorzugt Sprühtrocknung.

Die Adsorbermaterialien können umweltfreundlich entsorgt werden. Sie können in üblicher Weise als Bioabfall kompostiert oder beispielsweise als Düngemittel oder zur Biogasherstellung verwendet werden.

Wie bereits erläutert, können an sich beliebige pflanzliche Rohstoffe im erfindungsgemäßen Verfahren eingesetzt werden. Als Rohstoffe können beispielsweise Ölsaaten, Pressrückstände der Ölgewinnung, Leguminosen und alle anderen proteinhaltigen pflanzlichen Rohstoffe verwendet werden. Besonders vorteilhaft sind proteinreiche pflanzliche Rohstoffe, die > 10 Gew.-%, besser > 20 Gew.- %, bevorzugt > 30 Gew.-% Pflanzenprotein enthalten, bezogen auf die Trockenmasse des pflanzlichen Rohstoffs.

Die im Pflanzenproteinextrakt enthaltenen unerwünschten Begleitstoffe stellen oft eine Mischung verschiedener Verbindungen dar, die auch chemisch unterschiedlicher Natur sind. Das erfindungsgemäße Verfahren eignet sich insbesondere zur Entfernung wasserlöslicher störender Begleitstoffe, insbesondere Aroma-, Geschmacks- und/oder Farbkomponenten. Durch ihre Wasserlöslichkeit können die störenden Begleitstoffe aus der vom Pflanzenprotein gebildeten Matrix herausgelöst werden und dann, teilweise bereits in geringer Konzentration, das Aroma, den Geschmack oder die Farbe eines Lebens- oder Futtermittels verschlechtern, in welche ein aus dem Pflanzenproteinextrakt gewonnenes Pflanzenproteinkonzentrat eingearbeitet ist. Gemäß einer Ausführungsform sind die unerwünschten Begleitstoffe, insbesondere Aroma-, Geschmacks- und/oder Farbkomponenten, ausgewählt aus der Gruppe der Polyphenole, besonders bevorzugt Hydrozimtsäuren, wie insbesondere Kaffeesäure und Sinapinsäure, sowie deren Derivate, wie Sinapin und Chlorogensäure.

Das im erfindungsgemäßen Verfahren eingesetzte anorganische Adsorbermaterial hat Einfluss auf die Selektivität der Abtrennung der unerwünschten Begleitstoffe.

Die im Rahmen der Erfindung zur Aufreinigung der Pflanzenproteine bevorzugt eingesetzten Tone können anionische Ladungen oder kationische Ladungen tragen oder auch ungeladen sein. Die Auswahl des Tons richtet sich dabei nach dem pflanzlichen Rohstoff und den Eigenschaften der abzutrennenden störenden Begleitstoffe, insbesondere Aroma-, Geschmacks- und/oder Farbkomponenten. Die Tone können dabei synthetischen oder natürlichen Ursprungs sein. In der Regel sind aufgrund der Kosten und der hohen Verfügbarkeit Tonmineralien natürlichen Ursprungs bevorzugt. Im erfindungsgemäßen Verfahren einsetzbare synthetische Tone sind Hydrotalcite.

Die erfindungsgemäß einsetzbaren anionischen Tone sind Vermiculite.

In einer weiteren erfindungsgemäßen Ausführungsform enthält das eingesetzte anorganische Adsorbermaterial ungeladene Tone, ausgewählt aus kerolithhaltigen Materialien und Mineralen der Talk-Gruppe, wie insbesondere Talk, Chlorit. Solche Tone können beispielsweise zur Entfernung von Fehlaromen aus Erbsenprotein, Sojaprotein oder Lupinenprotein verwendet werden.

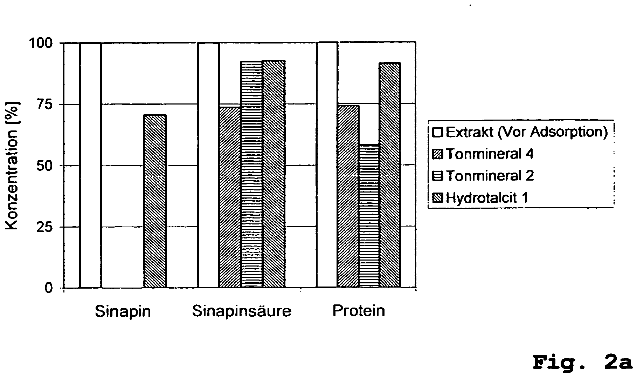

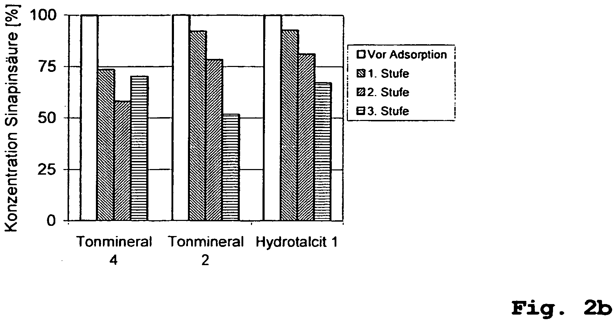

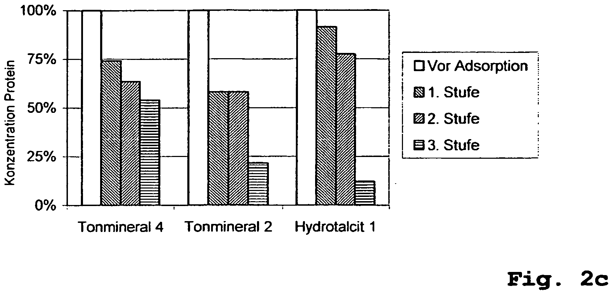

Was unter Kerolith zu verstehen ist, ist dem Fachmann geläufig und muss hier nicht näher erläutert werden. Beispielsweise kann hier auch auf G.B. Brindley et al., Mineralogical Magazine, 1977, 41, 443 - 452 verwiesen werden. Die Bestimmung von Kerolith kann wie dort beschrieben durchgeführt werden. Die chemische Analyse von Kerolith ergibt eine Zusammensetzung nahe R₃Si₄O₁₀(OH)₂·H₂O, wobei R hauptsächlich Mg darstellt und n etwa 0,8 bis 1,2 beträgt. Charakteristisch ist der Diffraktionspeak bei Gitterabstand (Basalabstand) 10 Å, dessen Lage bei verschiedenen Feuchtigkeiten keine Expansion und bis 500°C keine thermische Kontraktion zeigt. Hier wird ausdrücklich auf die bei G.B. Brindley et al., Mineralogical Magazine, 1977, 41, 443 - 452 in Fig. 2 angegebene Pulver-Röntgendiffraktogramme für Kerolith und die dazugehörigen Teile des Textes verwiesen.

Der Ausdruck "Kerolith" soll hier der Einfachheit halber auch kerolithhaltige Komponenten umfassen. Der Begriff "kerolithhaltige Komponente" soll zum Ausdruck bringen, dass erfindungsgemäß auch anorganische Adsorbermaterialien eingesetzt werden können, die neben Kerolith noch weitere Bestandteile enthalten. Beispielsweise enthalten viele kommerziell erhältliche Kerolithprodukte neben Kerolith noch unterschiedliche Mengen an Begleitmineralien. Zudem sind auch Abmischungen von Kerolith mit anderen Bestandteilen, wie beispielsweise anderen mineralischen Bestandteilen, insbesondere Schichtsilikaten, denkbar.

Kerolith findet sich in der Natur oft vergesellschaftet mit verwandten Mineralien, insbesondere aus der Gruppe der Smektite und dabei insbesondere mit Stevensiten oder Saponiten. Stevensite bzw. Saponite kann man auch als Modifikation des Keroliths darstellen. So entsteht aus Kerolith Stevensit, wenn ein Teil der Oktaederpositionen, die mit Magnesiumionen besetzt sind, leer bleiben. Saponit entsteht durch Substitution von Si⁴⁺-Positionen durch Al³⁺_{.}

Nach einer erfindungsgemäßen Ausführungsform wird mindestens eine kerolithhaltige Komponente als anorganisches Adsorbermaterial eingesetzt, die im Wesentlichen oder vollständig aus Kerolith oder mindestens einer kerolithhaltigen Komponente besteht.

Nach einer bevorzugten Ausführungsform enthält die als anorganisches Adsorbermaterial eingesetzte kerolithhaltige Komponente mindestens 10 Gew.-%, vorzugsweise mindestens 50 Gew.-%, insbesondere mindestens 75 Gew.-%, besonders bevorzugt mindestens 90 Gew.-%, insbesondere bevorzugt mindestens 95 Gew.-%, an Kerolith. So wurde überraschend gefunden, dass eine besonders gute Störstoffbindung resultiert, wenn Kerolith in den erfindungsgemäß verwendeten Komponenten mineralogisch die Hauptphase darstellt.

Im Rahmen der vorliegenden Erfindung wurde weiterhin gefunden, dass besonders solche kerolithhaltigen Komponenten als anorganisches Adsorbermaterial geeignet sind, die einen Magnesiumoxidgehalt von mindestens 15 Gew.-%, insbesondere mindestens 17 Gew.-%, weiter bevorzugt mindestens 20 Gew.-%, aufweisen. Entsprechende Materialien sind kommerziell verfügbar. Weiterhin wird bevorzugt, dass der Magnesiumoxidgehalt der verwendeten kerolithhaltigen Komponenten nicht über 40 Gew.-%, insbesondere nicht über 35 Gew.-%, in vielen Fällen weiter bevorzugt nicht über 32 Gew.-%, liegt.

Der Gehalt an Magnesiumoxid ist auch bestimmend für die genaue Ausbildung der Schichtstruktur des Materials. Es wird angenommen, ohne dass die Erfindung auf die Richtigkeit dieser Annahme beschränkt wäre, dass die Schichtstruktur des erfindungsgemäß verwendeten anorganischen Adsorbermaterials, eine besonders günstige Porosimetrie und besonders effiziente Oberflächen zur Adsorption einer Vielzahl unterschiedlicher unerwünschter Begleitstoffe bereitstellt.

Nach einer erfindungsgemäßen Ausführungsform, liegt die BET-Oberfläche (gemessen nach DIN 66131, siehe Methodenteil) vorzugsweise bei mindestens 60 m²/g, insbesondere mindestens 80 m²/g, insbesondere mindestens 100 m²/g. Diese hohen BET-Oberflächen ermöglichen offenbar für einige unerwünschte Begleitstoffe eine noch effizientere Adsorption.

Es wurde weiterhin gefunden, dass besonders solche Komponenten besonders gute Ergebnisse liefern, die eine Kationenaustauschkapazität (CEC, cation exchange capacity) von weniger als 40 meq/100 g, insbesondere weniger als 35 meq/100 g, besonders bevorzugt weniger als 30 meq/100 g, aufweisen. Die CEC kann wie im nachstehenden Methodenteil angegeben bestimmt werden.

Nach einer weiteren bevorzugten Ausführungsform werden solche kerolith- haltigen Komponenten eingesetzt, deren CEC mindestens 2 meq/100 g, vorzugsweise mindestens 5 meq/100 g, insbesondere mindestens 10 meq/100 g, weiter bevorzugt mindestens 15 meq/100 g beträgt.

Die ungeladenen Systeme, wie der Kerolith sind insbesondere zur Entfernung hydrophober störender Begleitstoffe aus dem Planzenproteinextrakt geeignet.

Tragen die im Pflanzenprotein enthaltenen unerwünschten Begleitstoffe negative Ladungen, so werden besonders bevorzugt kationische Tone zur Aufreinigung eingesetzt. Dabei handelt es sich um sogenannte Hydrotalcite.

Die erfindungsgemäß verwendeten Schichtdoppelhydroxide sind somit ausgewählt aus der Gruppe, bestehend aus natürlichen und synthetischen Hydrotalciten und Verbindungen mit einer hydrotalcitähnlichen Struktur. Dem Fachmann ist geläufig, was unter Hydrotalciten und Verbindungen mit einer hydrotalcitähnlichen Struktur zu verstehen ist. Nach einer bevorzugten Ausführungsform kann, solange das weiter unten erläuterte Verhältnis von M²⁺ zu N³⁺ eingehalten ist, ein Schichtdoppelhydroxid, ausgewählt aus der Gruppe der natürlichen und der synthetischen Hydrotalcite und der hydrotalcitähnlichen Verbindungen verwendet werden, wie sie beispielsweise in der Literaturstelle Catalysis Today, Vol. 11 (No.2) vom 2. Dezember 1991, Seiten 173 bis 301, beschrieben sind ("hydrotacite-like compounds). Solche Verbindungen weisen eine hydrotalcitähnliche Struktur auf.

Zur Herstellung der Hydrotalcite bzw. der Verbindungen mit einer hydrotalcitähnlichen Struktur kann dabei grundsätzlich jedes dem Fachmann geläufige Verfahren eingesetzt werden, wie es beispielsweise in der vorstehenden Literaturstelle Catalysis Today (a.a.O.) auf den Seiten 173 bis 301, insbesondere 201 bis 212, in der DE 20 61 114, den US-A-5,399,329 und 5,578,286, der DE 101 19 233 oder der WO 01/12570 sowie in "Handbook of Clay Science", F Bergaya, B.K.G. Theng and G. Lagaly (Eds.), Developments in Clay Science, Vol. 1, Chapter 13.1, Layered Double Hydroxides, C. Forano, T. Hibino, F. Leroux, C. Taviot-Gueho, Handbook of Clay Science, 2006 beschrieben ist.

Ein Schichtdoppelhydroxid (LDH) besitzt die allgemeine Summenformel

[M₁₋ₓ²⁺Nx³⁺ (OH) ₂] ^{x+} [Aⁿ⁻] _{x/n} · yH₂O

, wobei M²⁺ mindestens ein zweiwertiges Metallion und N³⁺ mindestens ein dreiwertiges Metallion darstellt, Aⁿ⁻ mindestens ein Anion, x eine rationale Zahl zwischen 0 und 1, n eine positive Zahl und y eine positive Zahl einschließlich 0 bedeuten.

Allgemein kann jedes für Schichtdoppelhydroxide geeignete und dem Fachmann geläufige zweiwertige Metallion oder eine Kombination aus zwei oder mehr solcher Metallionen als M²⁺ verwendet werden. Insbesondere stellt M²⁺ ein oder mehrere aus der Gruppe von Mg²⁺, Ca²⁺, Zn²⁺, Mn²⁺, Co²⁺, Ni²⁺, Fe²⁺, Sr²⁺, Ba²⁺ und/oder Cu2⁺ dar.

Allgemein kann jedes für Schichtdoppelhydroxide geeignete und dem Fachmann geläufige dreiwertige Kation oder eine Kombination aus zwei oder mehr solcher Kationen als N³⁺ verwendet werden. Insbesondere stellt N³⁺ ein oder mehrere dreiwertige Kationen aus der Gruppe von Al³⁺, Mn³⁺, Co³⁺ , Ni³⁺, Cr³⁺, Fe³⁺, Ga³⁺, Sc³⁺, B³⁺ und/oder dreiwertige Kationen von Seltenerdenmetallen dar.

Doppelschichthydroxide (LDHs) können auch einwertige Kationen, wie z.B. Li⁺, enthalten, die die zweiwertigen Kationen teilweise oder ganz ersetzen können.

Nach einer besonders vorteilhaften erfindungsgemäßen Ausführungsform ist das Schichtdoppelhydroxid ein Hydrotalcit dessen allgemeine Summenformel zwischen [Mg₂Al (OH) ₆] (CO₃) _{0,5} und [Mg_{0,28}Al₀,₇₂ (OH) ₂] (CO₃)_{0,72} liegt

Es wurde nach einer vorteilhaften Ausführungsform auch gefunden, dass Materialien, die neben einer Hydrotalcitphase auch eine Boehmitphase aufweisen, besonders gut geeignet sind. Eine solche Boehmitphase tritt bei hohen Aluminiumgehalten der Hydrotalcite häufig auf. Es kann aber erfindungsgemäß auch eine Mischung eines Hydrotalcits und eines Boehmits hergestellt und verwendet werden. Somit können sowohl Mischphasen als auch Mischungen aus Materialien mit Hydrotalcitphase und Materialien mit Boehmitphase eingesetzt werden. Vorzugsweise liegt der Hydrotalcitanteil bei 55 Gew.-% oder mehr.

Die erfindungsgemäß verwendeten Schichtdoppelhydroxide liegen bevorzugt in nicht calcinierter Form vor. Unter Calcinierung wird dabei insbesondere eine Temperaturbehandlung verstanden, bei der die Doppelschichtstruktur ganz oder teilweise verloren geht. Nach einer bevorzugten Ausführungsform wird das Schichtdoppelhydroxid als uncalciniert angesehen, wenn es keine Temperaturbehandlung bei mehr als etwa 500 °C, insbesondere mehr als 450°C, insbesondere mehr als 350°C, insbesondere mehr als 250°C, insbesondere mehr als 150°C erfahren hat.

Das Zwischenschichtanion Aⁿ⁻ ist vorzugsweise aus der Gruppe bestehend aus Carbonat, Nitrat, Halogenid, Sulfat und Phosphat oder deren Gemischen ausgewählt, wobei n eine positive ganze Zahl ist. Besonders bevorzugt ist Aⁿ⁻ (siehe Summenformel oben) Carbonat oder das Schichtdoppelhydroxid liegt in Carbonatform vor, wobei bevorzugt mindestens 50 %, bevorzugter mindestens 75 % und insbesondere bevorzugt mindestens 90 % der Zwischenschichtanionen Aⁿ⁻ Carbonationen sind.

Als weiteren Vorteil weist das hier verwendete Schichtdoppelhydroxid auf, dass es an der Luft stabil ist und somit leicht gelagert werden kann.

Die erfindungsgemäß verwendeten Schichtdoppelhydroxide können anionische Verunreinigungen in Mengen binden, die für die technische Anwendung interessant sind.

Das im erfindungsgemäßen Verfahren verwendete Schichtdoppelhydroxid weist vorzugsweise eine BET-Oberfläche von mehr als 15 m²/g, weiter bevorzugt mehr als 20 m²/g, besonders bevorzugt mehr als 55 m²/g, vorzugsweise von mehr als 65 m²/g, und weiter bevorzugt auch ein Porenvolumen von mehr als 0,30 ml/g, besonders bevorzugt von mehr als 0,4 ml/g, insbesondere bevorzugt im Bereich von 0,45 - 0,6 ml/g (bestimmt nach der BJH-Methode (kumulatives Porenvolumen für Poren mit einem Durchmesser im Bereich von 1,7 bis 300 nm) auf.

Nach einer bevorzugten erfindungsgemäßen Ausführungsform weist das Schichtdoppelhydroxid einen mittleren Porendurchmesser von mehr als etwa 10 nm auf.

Besonders bevorzugt werden erfindungsgemäß anorganische Adsorbermaterialien verwendet, deren Partikel einen Durchmesser zwischen etwa 0,5 bis 100 µm, besonders bevorzugt zwischen 1 und 80 µm, insbesondere bevorzugt zwischen 4 und 60 µm aufweisen. Nach einer anderen bevorzugten Ausführungsform liegt das anorganische Adsorbermaterial in Form eines Granulates vor, welches bevorzugt eine mittlere Teilchengröße von 0,08 - 2,5 mm aufweist.

Gemäß einer Ausführungsform des erfindungsgemäßen Verfahrens kann das anorganische Adsorbermaterial, insbesondere das Schichtdoppelhydroxid, vor der Zugabe zum Pflanzenproteinextrakt auf einen pH-Wert von 5,0 bis 10,0, insbesondere bevorzugt von 6,0 bis 9,0 equilibriert werden. Dazu wird das anorganische Adsorbermaterial, insbesondere das Schichtdoppelhydroxid, in einem geeigneten Puffer aufgeschlämmt oder eine aus dem anorganischen Adsorbermaterial, insbesondere dem Schichtdoppelhydroxid hergestellte Filterpackung mit einem derartigen Puffer beaufschlagt. Die Konzentration des Puffers ist dabei vorzugsweise zwischen 30 bis 100 mmol/l.

Die Hydrotalcite sind beispielsweise gut für eine Entfernung von Chlorogensäure aus Sonnenblumenproteinpräparationen geeignet.

In einzelnen Fällen handelt es sich bei den durch die erfindungsgemäß eingesetzten anorganischen Adsorbermaterialien entfernten unerwünschten Begleitstoffe um Verbindungen, die als Nahrungsmittelzusatzstoffe eingesetzt werden können, weil positive gesundheitliche Wirkungen auf den menschlichen Organismus angenommen werden können. Beispiele hierfür sind die Chlorogensäure und die Kaffeesäure, wie sie z.B. aus rohen Sonnenblumenproteinlösungen gewonnen werden kann.

Deshalb kann es zweckmäßig sein, die aus dem Pflanzenproteinextrakt abgetrennten unerwünschten Begleitstoffe aus den eingesetzten anorganischen Adsorbermaterialien zurückzugewinnen. Dies ist beispielsweise bei den eingesetzten Tonen durch unterschiedliche Verfahrensvarianten möglich: Einsetzbar ist zum Beispiel eine Extraktion mit Lösemitteln, wie z.B. Ethanol oder Aceton. Will man die an Hydrotalcite gebundene Chlorogensäure wiedergewinnen, so lässt sich das beispielsweise mit einem Phosphatpuffer bewerkstelligen.

Aus dem Stand der Technik ist die Verwendung bestimmter Schichtdoppelhydroxide als Anionaustauscher bzw. Adsorbens bekannt. Dabei wird Hydrotalcit oft in der aktivierten calcinierten Form verwendet. Bei der Calcination wird Hydrotalcit über mehrere Stunden bei 600°C behandelt, wobei Wasser und Kohlendioxid entweichen. Die calcinierten Hydrotalcite haben basische Eigenschaften und sind sehr hitzestabil. Allerdings sind sie sehr empfindlich gegen Kohlendioxid und Feuchtigkeit aus der Luft. So müssten die calcinierten Hydrotalcite unter Luftausschluss gelagert werden, was für großtechnische Anwendungen nicht geeignet ist.

Es wurde gefunden, dass die Hydrotalcite insbesondere zur Abreicherung von anionischen Nebenbestandteilen in den Pflanzenproteinpräparationen eingesetzt werden können. Ein Beispiel hierzu stellt die Entfernung von Sinapinsäure aus Rapsproteinpräparationen dar.

Ein weiterer Gegenstand der Erfindung betrifft die Verwendung von Tonen zur Entfernung unerwünschter Begleitstoffe, insbesondere Aroma-, Geschmacks- und/oder Farbkomponenten aus Pflanzenproteinextrakten. Geeignete Tone wurden bereits weiter oben näher diskutiert.

Wie bereits beim erfindungsgemäßen Verfahren erläutert, sind die unerwünschten Begleitstoffe, insbesondere Aroma-, Geschmacks- und/oder Farbkomponenten, bevorzugt ausgewählt aus der Gruppe der Polyphenole, besonders bevorzugt Hydroxyzimtsäuren, wie insbesondere, Kaffeesäure und Sinapinsäure, sowie deren Derivate, wie Sinapin, und Chlorogensäure.

Die Erfindung wird im weiteren anhand von Beispielen sowie unter Bezugnahme auf die beigefügten Figuren näher erläutert. Dabei zeigt:
- Fig. 1a:: eine Darstellung der Anteile an Chlorogensäure in einem Sonnenblumenproteinextrakt nach Behandlung mit einem anorganischen Adsorbermaterial; der prozentuale Anteil der Chlorogensäure ist jeweils auf die Chlorogensäurekonzentration des ungereinigten Extrakts (100 %) bezogen;
- Fig. 1b:: eine Darstellung der Anteile an Kaffeesäure in einem Sonnenblumenproteinextrakt nach Behandlung mit einem anorganischen Adsorbermaterial; der prozentuale Anteil der Chlorogensäure ist jeweils auf die Chlorogensäurekonzentration des ungereinigten Extrakts (100 %) bezogen;
- Fig. 2a:: Entfernung von Sinapin und Sinapinsäure aus einem Rapsproteinextrakt durch einmalige Behandlung mit einem anorganischen Adsorbermaterial (1 Gew.-%); die prozentualen Anteile an Sinapin und Sinapinsäure sind auf den ungereinigten Rapsproteinextrakt bezogen (100 %);
- Fig. 2b:: Entfernung von Sinapin und Sinapinsäure aus einem Rapsproteinextrakt durch mehrmalige Behandlung mit einem anorganischen Adsorbermaterial (1-Gew.-%); die prozentualen Anteile an Sinapin und Sinapinsäure sind auf den ungereinigten Rapsproteinextrakt bezogen (100 %);
- Fig. 2c:: Entfernung von Rapsprotein aus einem Rapsproteinextrakt durch mehrmalige Behandlung mit einem anorganischen Adsorbermaterial (1 Gew.-%); die prozentualen Anteile an Rapsprotein sind auf den ungereinigten Rapsproteinextrakt bezogen (100 %);
- Fig. 3:: Entfernung von Sinapin und Sinapinsäure aus einem Rapsproteinextrakt durch einmalige Behandlung mit verschiedenen Adsorbermaterialien (1 Gew.-%); die prozentualen Anteile an Sinapin und Sinapinsäure sind auf den ungereinigten Rapsproteinextrakt bezogen (100 %).

### Beispiele

### Allgemeine Methoden

### BET-Oberfläche/Porenvolumen nach BJH und BET:

Die Oberfläche und das Porenvolumen wurden mit einem vollautomatischen Stickstoffporosimeter der Firma Mikromeritics, Typ ASAP 2010 bestimmt.

Die Probe wird im Hochvakuum auf die Temperatur von flüssigem Stickstoff abgekühlt. Anschließend wird kontinuierlich Stickstoff in die Probenkammer dosiert. Durch die Erfassung der adsorbierten Gasmenge als Funktion des Druckes wird bei konstanter Temperatur eine Adsorptionsisotherme ermittelt. Nach einem Druckausgleich wird das Analysengas schrittweise entfernt und eine Desorptionsisotherme aufgenommen.

Zur Ermittlung der spezifischen Oberfläche und der Porosität nach der BET-Theorie werden die Daten gemäß DIN 66131 ausgewertet.

Das Porenvolumen wird ferner aus den Messdaten unter Anwendung der BJH-Methode ermittelt (E.P. Barret, L.G.Joiner, P.P. Haienda, J. Am. Chem. Soc. 73 (1951, 373). Bei diesem Verfahren werden auch Effekte der Kapillarkondensation berücksichtigt. Porenvolumina bestimmter Porengrößenbereiche werden durch Aufsummieren inkrementeller Porenvolumina bestimmt, die aus der Auswertung der Adsorptionsisotherme nach BJH erhalten werden. Das Gesamtporenvolumen nach der BJH-Methode bezieht sich auf Poren mit einem Durchmesser von 1,7 bis 300 nm.

### Teilchengrößenbestimmung mittels dynamischer Lichtstreuung (Malvern):

Die Messungen werden mit einem Gerät "Mastersizer" der Firma Malvern Instruments Ltd., UK, entsprechend den Angaben des Herstellers durchgeführt. Die Messungen werden mit der vorgesehenen Probenkammer ("dry powder feeder") in Luft durchgeführt und die auf das Probenvolumen bezogenen Werte ermittelt.

### Wassergehalt:

Der Wassergehalt der Produkte bei 105°C wird unter Verwendung der Methode DIN/ISO-787/2 ermittelt.

### Elementaranalyse:

Diese Analyse beruht auf dem Totalaufschluss der Tonmaterialien bzw. des entsprechenden Produktes. Nach dem Auflösen der Feststoffe werden die Einzelkomponenten mit herkömmlichen spezifischen Analysemethoden, wie z.B. ICP analysiert und quantifiziert.

### Ionenaustauschkapazität (nur für anionische Schichtmineralien):

Zur Bestimmung der Kationenaustauschkapazität wird das zu untersuchende Tonmaterial über einen Zeitraum von 2 Stunden bei 105°C getrocknet. Danach wird das getrocknete Tonmaterial mit einem Überschuss an wässriger 2N NH₄Cl-Lösung 1 Stunde unter Rückfluss zur Reaktion gebracht. Nach einer Standzeit von 16 Stunden bei Raumtemperatur wird filtriert, worauf der Filterkuchen gewaschen, getrocknet und vermahlen wird und der NH₄-Gehalt im Tonmaterial durch Stickstoffbestimmung (CHN-Analysator "Vario EL III" der Firma Elementar in Hanau) nach den Herstellerangaben ermittelt. Der Anteil und die Art der ausgetauschten Metallionen wird im Filtrat durch ICP-Spektroskopie bestimmt.

### Bestimmung des Montmorillonitgehalts über die Methylenblauadsorption

Der Methylenblauwert ist ein Maß für die innere Oberfläche der Tonmaterialien.

### a) Herstellung einer Tetranatriumdiphosphat-Lösung:

5,41 g Tetranatriumdiphosphat werden auf 0,001 g genau in einen 1000 ml Messkolben eingewogen und unter Schütteln bis zur Eichmarke mit dest. Wasser aufgefüllt.

### b) Herstellung einer 0,5 %-igen Methylenblaulösung:

In einem 2000 ml Becherglas werden 125 g Methylenblau in ca. 1500 ml dest. Wasser gelöst. Die Lösung wird abdekantiert und auf 25 1 mit dest. Wasser aufgefüllt.

0,5 g feuchter Testbentonit mit bekannter innerer Oberfläche werden in einem Erlenmeyerkolben auf 0,001 g genau eingewogen. Es werden 50 ml Tetranatriumdiphosphatlösung zugegeben und die Mischung 5 Minuten zum Sieden erhitzt. Nach dem Abkühlen auf Raumtemperatur werden 10 ml 0,5 molare H₂SO₄ zugegeben und 80 bis 95 % des zu erwartenden Endverbrauchs an Methylenblaulösung zugegeben. Mit dem Glasstab wird ein Tropfen der Suspension aufgenommen und auf ein Filterpapier gegeben. Es bildet sich ein blau-schwarzer Fleck mit einem farblosen Hof. Es wird nun in Portionen von 1 ml weitere Methylenblaulösung zugegeben und die Tüpfelprobe wiederholt. Die Zugabe erfolgt solange, bis sich der Hof leicht hellblau färbt, also die zugegebene Methylenblaumenge nicht mehr vom Testbentonit absorbiert wird.

### c) Prüfung von Tonmaterialien:

Die Prüfung des Tonmaterials wird in der gleichen Weise durchgeführt wie für den Testbentonit. Aus der verbrauchten Menge an Methylenblaulösung lässt sich die innere Oberfläche des Tonmaterials berechnen.

381 mg Methylenblau/g Ton entsprechen nach diesem Verfahren einem Gehalt von 100 % Montmorillonit.

### Bestimmung des Trockensiebrückstandes:

Etwa 50 g des zu untersuchenden lufttrockenen Tonmaterials werden auf einem Sieb der entsprechenden Maschenweite eingewogen. Das Sieb wird an einen Staubsauger angeschlossen, der über ein unter dem Siebboden kreisenden Saugschlitz alle Anteile, die feiner als das Sieb sind, durch das Sieb heraussaugt. Das Sieb wird mit einem Plastikdeckel abgedeckt und der Staubsauger eingeschaltet. Nach 5 Minuten wird der Staubsauger abgeschaltet und die Menge der auf dem Sieb verbliebenen gröberen Anteile durch Differenzwägung ermittelt.

### Quantitative Bestimmung von Phenolsäuren in wässrigen Lösungen:

Die Konzentrationen der Phenolsäuren (Chlorogensäure, Sinapin) wurden UV Spektroskopisch bestimmt. Dabei wurde nach der Vorschrift vorgegangen, wie sie in "Thiyam U., Stöckmann H., Schwarz K. Antioxidant Activity of Rapeseed Phenolics and Their Interactions with Tocopherols During Lipid Oxidation JAOCS, Vol. 83, no. 6 (2006)" beschrieben ist.

### Herstellung der Proteinextrakte

### Extraktion von Raps

100 g entölter Rapsschrot wurden in 1 Liter kaltem entionisiertem Wasser (5 °C) suspendiert und 30 Minuten gerührt. Nach 10-minütigem Zentrifugieren bei 4000 g wurde der Überstand abgetrennt. Das Pellet wurde für die nun folgende Proteinextraktion verwendet. Dazu wurde soviel Wasser ergänzt, wie Flüssigkeit zuvor abgetrennt worden war. Der Ansatz wurde auf 40 °C erhitzt, auf den jeweiligen pH-Wert (7,4 oder 8,0) eingestellt und 45 min gerührt. Nach 15-minütiger Zentrifugation bei 4000 g wurde der Überstand vom Pellet getrennt. Der Überstand (= Pflanzenproteinextrakt) wurde für die Versuche zur Adsorption von unerwünschten Begleitstoffen an anorganischen Adsorbermaterialien verwendet.

### Extraktion von Sonnenblumenschrot

100 g entölter Sonnenblumenschrot wurden in 1 Liter Leitungswasser suspendiert. Mittels Salzsäure wurde der pH-Wert auf 5 eingestellt und der Ansatz für 5 Minuten mittels Ultra-Turrax^{®} gründlich vermischt. Nach 20-minütiger Zentrifugation bei 4000 g und 15 °C wurde der Überstand abgetrennt. Das Pellet wurde für die nun folgende Proteinextraktion verwendet. Dazu wurde soviel 1,5 M Salzlösung ergänzt wie Flüssigkeit zuvor abgetrennt wurde. Der pH-Wert wurde auf 6 bzw. 8 eingestellt und für 60 min gerührt. Nach 20-minütiger Zentrifugation bei 4000 g und 15 °C wurde der Überstand vom Pellet getrennt. Der Überstand (= Pflanzenproteinextrakt) wurde für die Versuche zur Adsorption von unerwünschten Begleitstoffen an anorganischen Adsorbermaterialien verwendet.

### Extraktion von Sojaschrot und Erbsenmehl

100 g entölter Sojaschrot oder 100 g Erbsenmehl wurden mit 1 Liter Leitungswasser vermischt. Nach Einstellung des pH-Wert auf 4,5 (mittels Salzsäure) wurde der Ansatz für 60 Minuten bei Raumtemperatur gerührt. Nach 10-minütiger Zentrifugation bei 3000 g wurde der Überstand abgetrennt. Das Pellet wurde für die folgende Proteinextraktion verwendet. Dazu wurde soviel Leitungswasser zum Pellet gegeben, wie Flüssigkeit zuvor abgetrennt worden war. Der entsprechende pH-Wert wurde eingestellt und die Mischung für 60 min gerührt. Nach 10-minütiger Zentrifugation bei 3000 g wurde der Überstand vom Pellet getrennt. Der Überstand (= Pflanzenproteinextrakt) wurde für die Versuche zur Adsorption unerwünschter Begleitstoffe an anorganische Adsorbermaterialien verwendet.

### Verfahrensführung bei Extraktion von pflanzlichem Rohstoff ohne Vorextraktion

Bei Versuchen ohne Vorextraktion wurden 100 g pflanzlicher Rohstoff direkt mit 1 Liter Leitungswasser vermischt, der entsprechende pH-Wert eingestellt und die Mischung für 60 min gerührt. Nach 10-minütiger Zentrifugation bei 3000 g wurde der Überstand vom Pellet getrennt. Der Überstand (= Pflanzenproteinextrakt) wurde für die Versuche zur Adsorption unerwünschter Begleitstoffe an anorganischen Adsorbermaterialien verwendet.

### Adsorption an anorganischem Adsorbermaterial

100 ml der Proteinextrakte wurden mit dem jeweiligen anorganischen Adsorbermaterial in den entsprechenden Konzentrationen (1 Gew.-%, 2 Gew.-% oder 5 Gew.-%, bezogen auf das Gewicht des eingesetzten pflanzlichen Rohstoffs) versetzt und 30 Minuten gerührt. Durch Zentrifugation (3000 g, 10 min, 25 °C) wurden die Adsorbermaterialien wieder abgetrennt. Gegebenenfalls wurde der

erhaltene Überstand ein bis zwei weiteren Adsorptionsstufen unterzogen.

Die erhaltenen Extrakte waren das Ausgangsmaterial für die analytischen und sensorischen Untersuchungen.

Bestimmung des Proteingehaltes in Lösungen mit Biuret-Reaktion

### Prinzip

Die Biuret-Reaktion dient zum Nachweis von Verbindungen, die mindestens zwei CO-NH-Gruppen enthalten und beruht auf einer Kupfer-Komplexsalz-Bildung. Dies wird sichtbar durch eine rotviolette Färbung und kann durch Messung der Extinktion bei λ = 550 nm quantitativ erfasst werden.

### Durchführung

Die Proteinlösungen wurden soweit verdünnt, dass die Proteinkonzentration im Kalibrierbereich 1 - 10 mg/ml lag. Zu 0,5 ml dieser Lösungen (Probe bzw. Proteinstandardlösung) wurden jeweils 2 ml Biuret-Lösung (*) gegeben und sofort gemischt. Anschließend wurden diese 20 min bei 37 °C im Wasserbad inkubiert. Nach wiederum 20 min wurde die Extinktion der einzelnen Proben im Spektralphotometer bei λ = 550 nm vermessen.

(*) 6,0 g Kalium-Natriumtartrat C₄H₄KNaO₆; 1,5 g Kupfersulfat CuSO₄ · 5 H₂O; 250 ml dest. Wasser; 300 ml 1 M Natronlauge

Die Proteinkonzentration der Proben wird berechnet, indem die Extinktion der einzelnen Proteinextrakte, unter Einbeziehung des Verdünnungsfaktors, durch den Umrechnungsfaktor (Steigung) aus der Kalibriergeraden dividiert werden. Aus den drei einzelnen Konzentrationen wird danach der Mittelwert gebildet.

### Literatur

AACC Method 46-15: Crude Protein - 5-Minute Biuret Method for Wheat and Other Grains. In: Approved Methods of the American Association of Cereal Chemists, edition no. 8, American Association of Cereal Chemists, Inc., St. Paul, MN USA, 1983.

Matissek, R., Schnepel, F.-M., Steiner, G. In: Lebensmittel-Analytik. Springer Verlag, Berlin, Tokyo, 1988.

### Quantitative Bestimmung von Phenolsäuren mit HPLC

Als Ausgangsmaterial dienten die wie oben beschrieben hergestellten Pflanzenproteinextrakte vor und nach der Adsorption unerwünschter Begleitstoffe an das anorganische Adsorbermaterial. 1 ml des jeweiligen Proteinextrakts wurde mit 1 ml 70 %-igem wässrigem Methanol gemischt. Die Konzentration muss im Bereich der Kalibriergerade der zu bestimmenden Substanz liegen. Anderenfalls wurde der Proteinextrakt weiter verdünnt. Die verdünnte Probe wurde zentrifugiert und der Überstand in der HPLC vermessen.

### Analysenbedingungen

- Säule:: Synergi™ Fusion-RP, Phenomenex, size: 250mm x 4,6 mm 4 micron ;
- Betriebssoftware:: Chromoleon (Chromatography Management Systems), Dionex;
- Laufzeit :: 40min;
- Mobile Phase A:: 90% H₂O; 10% MeOH; 0,2% o-Phosphorsäure (85 %);
- Mobile Phase B:: 100% MeOH; 0,1% o-Phosphorsäure;
- Injektionvolume:: 20 µl;
- Flussrate :: 0,8 ml /min;
- Temperatur:: Raumtemperatur;
- Detektion:: UV-Vis bei 330nm;

### Gradient:

| Zeitintervalle in Min. | Eluent A in % | Eluent B % |
|---|---|---|
| Von 0 bis 7 | 90 | 10 |
| Von 7 bis 20 | 80 | 20 |
| Von 20 bis 25 | 55 | 45 |
| Von 25 bis 28 | 30 | 70 |
| Von 28 bis 40 | 0 | 100 |

Die Quantifizierung erfolgte mittels Kalibriergerade, die durch die jeweiligen Standardsubstanzen, die in verschiedenen Konzentrationen vermessen werden, aufgestellt wurde. Die Flächen der zuvor identifizierten Peaks wurden mit Hilfe der Kalibriergeraden in Konzentrationen umgerechnet.

### Literatur:

Thiyam, U., Stöckmann, H., Schwarz, K. Antioxidant activity of rapeseed phenolics and their interactions with tocopherols during lipid oxidation. JAOCS 83 (6), 2006, 523 - 528.

### Beispiel 1: Charakterisierung der anorganischen Adsorbermaterialien

Die Charakterisierungsdaten der erfindungsgemäßen Materialien sind in Tabelle 1 aufgelistet. Tonmineral 1 bis 3 sind Vergleichsbeispiele. Tonmineral 4 und Hydrotalcit 1 Synthal 696 sind erfindungsgemäß.

**Tabelle 1: Charakterisierung anorganischer Adsorbermaterialien**

| Parameter | Tonmin. 1 Calcigel | Tonmin. 2 | Tonmin. 3 | Tonmin. 4 | Hydrotalcit 1 Synthal 696 |
|---|---|---|---|---|---|
| Mineralische Phase | Ca-Bentonit | Soda-aktivierter Bentonit | Saponit | Kerolith/ Smectit | Hydrotalcit in Carbonatform |
| BET-Oberfläche [m²/g] | 65,5 | n.d. | 125.3 | 224.2 | 61,4 |
| Mikroporenoberfläche [m2/g] | 64,9 | n.d. | 56,6 | 113 | 4,7 |
| Externe Oberfläche [m²/g] | 39,3 | n.d. | 80,8 | 147 | 56,7 |
| Kumulatives Porenvolumen nach BJH für Poren mit Durchmessern von 1,7 bis 300 nm, [cm³/g] | 0,10 | n.d. | 0,16 | 0,22 | 0,482 |
| Durchschnittsporendurchmesser [4 V/A] nach BET [nm] | 6,5 | n.d. | 5,2 | 4,8 | 24,6 |
| Durchschnittsporendurchmesser [4V/A] nach BJH [nm] | 9,6 | n.d. | 7,2 | 6,6 | 30,0 |
| Gesamtkationen - Austauschkapazität für Smektite [meq/100 g] | 65 | 63 | 20 | 20 | nicht bestimmbar |
| Silicat-Analyse (%) | | | | | |
| SiO₂ | 57 | 53,5 | 52.0 | 50.5 | 20,8 |
| Al₂O₃ | 18 | 16,8 | 6.6 | 3.6 | |
| Fe₂O₃ | 5,5 | 4 , 3 | 1.9 | 1.1 | |
| CaO | 2,75 | 6,0 | 1.1 | 4.8 | 93,8 |
| MgO | 4 | 3,9 | 26.0 | 25.6 | |
| Na₂O | 1,85 | 3,5 | 0.32 | 0.13 | |
| K₂O | n.b. | 1, 3 | 1.4 | 0.8 | |
| TiO₂ | 0,4 | 0,3 | 0.25 | 0.12 | |
| Loss on ignition | 10,5 | 9,7 | 9.5 | 12.7 | |
| Trockensiebrückstand auf 63 µm [Gew%] | ≤ 20 | ≤ 30 | n.d. | 20,8 | n.d. |
| Trockensiebrückstand auf 45 µm [Gew%] | n.d. | n.d. | 50 | 31,6 | n.d. |
| Wassergehalt [Gew%] | 9 ± 3 | 7 ± 3 | 9 ± 4 | 7 ± 4 | 4 |
| pH [Suspension, 5 Gew%] | 8,0 ± 1 | 10 ± 1 | 8,5 ± 1 | 8 ± 1 | 8,6 |

**Tabelle 1a: Anteile an Begleitmineralien in den anorganischen Adsorbermaterialien:**

| Parameter | Tonmin. 1 | Tonmin. 2 | Tonmin. 3 | Tonmin. 4 |
|---|---|---|---|---|
| Quarz [%] | 6 - 9 | 6 - 9 | 2 - 3 | 1 - 2 |
| Feldspat [%] | 1 - 4 | 1 - 4 | 2 - 3 | 1 - 2 |
| Calcit | - | - | 0,5 - 1 | 3 - 4 |
| Kaolinit [%] | 1 - 2 | 1 - 2 | - | - |
| Glimmer [%] | 1 - 6 | 1 - 6 | - | - |
| Andere Minerale [%] | 5 - 10 | 5 - 10 | - | - |

### Beispiel 2: Untersuchung der Adsorption von Chlorogensäure an anorganischen Adsorbermaterialien

Bei Chlorogensäure handelt es sich um ein Phenolsäurederivat, welches in rohem Sonnenblumenprotein vorkommt. Bei den im Weiteren beschriebenen Versuchen wurde eine Chlorogensäurekonzentration von 0,2 Gew.-% in Wasser eingestellt und die Adsorption der Chlorogensäure einerseits bei pH 6 und zweimolarer NaCl-Lösung, andererseits bei pH 8 und einmolarer NaCl-Lösung untersucht. Es wurde jeweils mit 25 ml Lösung gearbeitet. Hierbei handelt es sich um typische Bedingungen, wie sie beispielsweise auch bei der Extraktion von Sonnenblumenproteinen eingestellt werden, um die Proteine aufzureinigen. Für die Versuche wurde käufliche Chlorogensäure (Sigma-Aldrich Chemie GmbH, Taufkirchen) verwendet. Die relative Konzentration der Chlorogensäure vor und nach der Adsorbensbehandlung wurde durch Messung der UV-Extinktion bei 324 nm bestimmt. Die entsprechenden Adsorbentien wurden 15 min in der gepufferten Chlorogensäurelösung gerührt. Danach wurden die Adsorbentien durch Zentrifugation abgetrennt, und nach entsprechender Verdünnung wurde photometrisch bei 324 nm die Chlorogensäurekonzentration bestimmt. Zunächst wurden die smektitischen Tonmineralien auf ihre Eignung zur Chlorogensäureadsorption bei einer Dosierung von 1 Gew.-%, bezogen auf die Gesamtlösung, untersucht. Die Ergebnisse sind in der folgenden Tabelle 2 dargestellt. Hierbei zeigt sich, dass insbesondere die hydrophoberen Tone auf der Basis von Stevensit-/Kerolit-Phasen bzw. Saponit-Phasen die Chlorogensäure in der Lösung abreichern können. In geringerem Umfang wurde hier eine Abreicherung mit einem Calciumbentonit bzw. einem hochaktivierten Natriumbentonit erzielt.

In einer weiteren Versuchsreihe wurden die besten Adsorbentien aus der ersten Versuchsreihe bei einer Konzentration von 5 Gew.-% eingesetzt. Zusätzlich wurde Hydrotalcit als erfindungsgemäßes anorganisches Adsorbermaterial untersucht. Als weitere Vergleichssysteme wurden weiterhin zwei Talkproben (Finntalc M 50 SQ, Westmin D 100, Hersteller/Lieferant: Mondo Minerals BV, 1040 HK Amsterdam, Niederlande) untersucht. Hier zeigte sich, dass die hydrophoben Tone (Saponit, Stevensit / Kerolit) unter den gegebenen Bedingungen im Vergleich zu Talk eine wesentlich bessere Bindekapazität für die Chlorogensäure aufwiesen. Eine noch höhere Bindung der Chlorogensäure konnte durch die Verwendung des erfindungsgemäßen Hydrotalcits 1 erzielt werden.

**Tabelle 2: Chlorogensäureadsorption bei pH 6**

| Adsorbens | Adsorption |
|---|---|
| 1% Adsorbens, 15 Minuten | |
| Tonmineral 1 | 4,1 % |
| Tonmineral 3 | 10,3 % |
| Tonmineral 4 | 12,3 % |
| 1 % Adsorbens, 30 Minuten | |
| Tonmineral 1 | 4,9 % |
| Tonmineral 3 | 9,7 % |
| Tonmineral 4 | 11,4 % |
| 1 % Adsorbens, 30 Minuten, reduzierte NaCl-Konzentration | |
| Tonmineral 1 | 5,0 % |
| Tonmineral 3 | 7,4 % |
| Tonmineral 4 | 8,6 % |
| 5 % Adsorbens, 30 Minuten | |
| Tonmineral 3 | 23,4 % |
| Tonmineral 4 | 39,9 % |
| Hydrotalcit 1 | 61,1 % |
| Finntalc M 50 SQ | 4,0 % |
| Westmin D 100 | 6,5 % |
| mehrfache Behandlung mit 5 % Adsorbens, jeweils 30 Minuten | |
| Tonmineral 4 | |
| 1. Behandlung | 32,1 % |
| 2. Behandlung | 55,6 % |
| 3. Behandlung | 68,5 % |
| Hydrotalcit 1 | |
| 1. Behandlung | 64,0 % |
| 2. Behandlung | 83,6 % |
| 3. Behandlung | 93,0 % |

**Tabelle 3: Chlorogensäureadsorption bei pH 8**

| Adsorbens | Adsorption |
|---|---|
| 1% Adsorbens, 15 Minuten | |
| Tonmineral 1 | 5,5 % |
| Tonmineral 3 | 8,8 % |
| Tonmineral 4 | 11,6 % |
| 1 % Adsorbens, 30 Minuten | |
| Tonmineral 1 | 7,3 % |
| Tonmineral 3 | 9,0 % |
| Tonmineral 4 | 10,6 % |
| 1 % Adsorbens, 30 Minuten, reduzierte NaCl-Konzentration | |
| Tonmineral 1 | 4,8 % |
| Tonmineral 3 | 6,9 % |
| Tonmineral 4 | 8,4 % |
| 5 % Adsorbens, 30 Minuten | |
| Tonmineral 3 | 27,6 % |
| Tonmineral 4 | 39,8 % |
| Hydrotalcit 1 | 61,8 % |
| Finntalc M 50 SQ | 3,1 % |
| Westmin D 100 | 6,4 % |
| mehrfache Behandlung mit 5 % Adsorbens, jeweils 30 Minuten | |
| Tonmineral 4 | |
| 1. Behandlung | 25,0 % |
| 2. Behandlung | 47,9 % |
| 3. Behandlung | 59,6 % |
| Hydrotalcit 1 | |
| 1. Behandlung | 64,5 % |
| 2. Behandlung | 82,0 % |
| 3. Behandlung | 92,3 % |

Die Ergebnisse zeigen insbesondere die Eignung von Hydrotalcit zur Adsorption von Chlorogensäure sowie auch die Eignung von hydrophoben oder teilhydrophoben Tonen auf der Basis von Stevensit / Kerolit bzw. Saponit. Talk ist für diese Anwendung weniger geeignet, was möglicherweise auf die geringe BET-Oberfläche zurückzuführen ist. Beide untersuchten Produkte weisen eine spezifische Oberfläche von < 20 m²/g auf.

### Beispiel 3: Adsorption von Sinapin / Sinapinsäure aus Rapsextrakt

Um die Eignung der erfindungsgemäßen Adsorbentien zur Entfernung von Sinapin / Sinapinsäure aus rohen Rapsproteinen zu untersuchen, wurde zunächst mit einem Extrakt gearbeitet, der vorwiegend Sinapin und Sinapinsäure enthielt. Die Konzentration an Sinapin/Sinapinsäure lag bei ca. 0,1 Gew.%, der Sinapinanteil betrug in etwa 90 %. Die Reduktion der Sinapin- bzw. Sinapinsäurekonzentration wurde auf die Ausgangskonzentration des verwendeten Extrakts bezogen und photometrisch nach einer halbstündigen Behandlung mit den anorganischen Adsorbermaterialien untersucht. Der Sinapingehalt wurde bei einer Messwellenlänge von 324 nm UV-spektroskopisch bestimmt. Die Proben wurden vorher durch ein 0,45 µm-Spritzenfilter filtriert. Die Proben wurden für die photometrische Bestimmung noch mit Methanol verdünnt. Es wurden jeweils 25 ml Lösung mit 1, 2 und 5 Gew.-% der anorganischen Adsorbermaterialien gerührt. Nach 30 min wurde abzentrifugiert und im Überstand der Rest des Sinapins bzw. der Sinapinsäure (Angabe der Summe) bestimmt. Die Reduktion wurde auf die Ausgangskonzentration bezogen, wobei diese auf 100 % gesetzt wurde. Adsorbentien, die in den Vorversuchen die Adsorption von Sinapin / Sinapinsäure zeigten, wurden in geringeren Aufwandmengen getestet. Hier zeigte sich, dass insbesondere Saponite, Kerolite sowie alkalisch aktivierte Bentonite geeignet sind, um mit relativ geringen Adsorbensmengen mehr als 50 % des Ausgangssinapins / -sinapinsäuregemisches abzutrennen.

**Tabelle 4: Adsorption von Sinapin und Sinapinsäure**

| Adsorbens | Adsorption |
|---|---|
| 5 % Adsorbens | |
| Tonmineral 1 | 66,8 % |
| Tonmineral 3 | 73,5 % |
| Tonmineral 4 | 84,3 % |
| Hydrotalcit 1 | 50,5 % |
| Finntalc M 50 SQ | 17,3 % |
| Westmin D 100 | 41,5 % |
| 2 % Adsorbens | |
| Tonmineral 1 | 50,9 % |
| Tonmineral 3 | 64,6 % |
| Tonmineral 4 | 75,8 % |
| 1 % Adsorbens | |
| Tonmineral 1 | 43,1 % |
| Tonmineral 3 | 53,6 % |
| Tonmineral 4 | 62,3 % |
| Tonmineral 2 | 62,3 % |
| EXM 1842 | 21,8 % |
| EXM 1843 | 45,3 % |
| 2 x 1 % Adsorbens | |
| 1. Behandlung Tonmineral 4 | 62,0 % |
| 2. Behandlung Tonmineral 4 | 75,7 % |
| | |
| 1. Behandlung Tonmineral 4 | 62,9 % |
| 2. Behandlung Hydrotalcit 1 | 74,3 % |

Nach dem Stand der Technik war bisher kein Separationsmaterial zur gezielten Abtrennung von Sinapin bekannt. Die Daten zeigen die gute Eignung von smektitischen Schichtsilicaten für diese Anwendung.

### Beispiel 4: Abtrennung von Chlorogensäure und Kaffeesäure aus Sonnenblumenproteinextrakt

Für die Versuche wurde ein Extrakt aus Sonnenblumenschrot eingesetzt, der wie oben beschrieben erhalten wurde.

Für die Versuche wurden die beiden Adsorbermaterialien eingesetzt, die in den Vorversuchen des Beispiels 2 zur Adsorption von Chlorogensäure die besten Ergebnisse zeigten.

### a) Extraktion bei pH 6

Es wurden zweistufige Adsorptionen mit Tonmineral 4 und Hydrotalcit 1 durchgeführt. Zusätzlich wurde eine Kombination von Tonmineral 4 und Hydrotalcit 1 (nacheinander) durchgeführt. Die Ergebnisse der Analytik sind in der folgenden Tabelle 5 dargestellt.

**Tabelle 5: Extraktion von Chlorogensäure und Kaffeesäure aus Sonnenblumenproteinextrakten**

| | Chlorogensäure | | Kaffeesäure | | Protein* |
|---|---|---|---|---|---|
| Probe | Konz [µg/ml] | Konz [%] | Konz [µg/ml] | Konz [%] | mg/ml |
| Überstand der Vor-extraktion | 1912,3 | | 19,9 | | 9,4 |
| Extrakt | 649, 3 | 100 | 14,8 | 100 | 9,5 |
| Tonmineral 4 1. Stufe | 377,0 | 58 | 7,6 | 51 | 7,2 |
| Tonmineral 4 2. Stufe | 137,7 | 21 | 3,9 | 26 | 6,7 |
| Hydrotalcit 1 1. Stufe | 47,2 | 7 | 0,2 | 2 | 12,0 |
| Hydrotalcit 1 2. Stufe | 2,5 | 0 | 0,0 | 0 | 5,2 |
| Hydrotalcit 1 + Tonmineral 4 | 10,9 | 2 | 0,0 | 0 | 6,2 |

| | | | | | |
|---|---|---|---|---|---|
| *Die Proteinwerte stellen nur Richtgrößen dar, weil die Proteine aufgrund einer Tiefkühllagerung teilweise ausgefallen waren. | | | | | |

Die nach der Vorextraktion verbleibenden Phenolsäuren können im Proteinextrakt durch Behandlung mit anorganischen Adsorbermaterialien größtenteils entfernt werden. Am besten erwies sich Hydrotalcit 1. Bereits durch einen Adsorptionsschritt konnte die Konzentration an Chlorogen- und Kaffeesäure auf 7 bzw. 2 % der Konzentration im Extrakt verringert werden.

Tonmineral 4 konnte die Konzentration reduzieren, aber deutlich schlechter als Hydrotalcit 1. Mehrstufige Verfahren verbessern die Polyphenol-Abtrennung, verschlechtern aber auch die Proteinausbeute.

### b) Extraktion bei pH 8

Das Verfahren wurde analog bei pH 8 durchgeführt. Die Ergebnisse der Analytik sind in folgender Tabelle dargestellt.

| | Chlorogensäure | | Kaffeesäure | | Protein |
|---|---|---|---|---|---|
| Probe | Konz [µg/ml] | Konz [%] | Konz [µg/ml] | Konz [%] | mg/ml |
| Überstand der Vor-extraktion | 1912,3 | | 19,9 | | 9,4 |
| Extrakt | 340,9 | 100 | 3,4 | 100 | 9,2 |
| Tonmineral 4 1. Stufe | 82,6 | 24 | 0,9 | 27 | 10,5 |
| Tonmineral 4 2. Stufe | 24,8 | 7 | 0,3 | 7 | 7,9 |
| A3 = Hydrotalcit 1 1. Stufe | 8,8 | 3 | 0,0 | 0 | 7,9 |
| Hydrotalcit 1 2. Stufe | 2,5 | 1 | 0,0 | 0 | 3,9 |
| Hydrotalcit 1 + Tonmineral 4 | 3,6 | 1 | 0,0 | 0 | 5,0 |

Die Abtrennung der Polyphenole ist bei pH 8 sehr gut. Mit Hydrotalcit 1 reicht wiederum ein Schritt zur annähernd vollständigen Abtrennung der Phenolsäuren. Mit Tonmineral 4 benötigt man 2 Stufen.

Allerdings kann es bei pH-Werten von 8 bereits zur irreversiblen Oxidation durch Polyphenoloxidase kommen. So werden die Phenole möglicherweise nicht mehr miterfasst.

### Vergleich pH 8 und pH 6

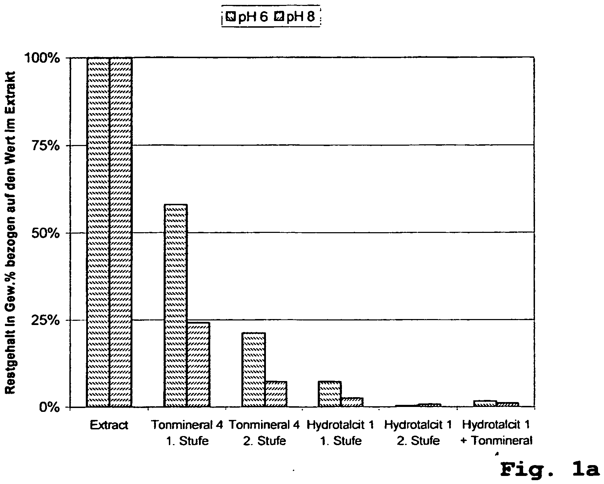

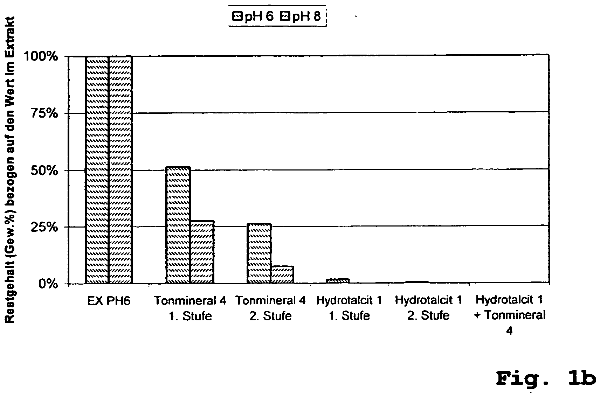

In Figuren 1a und 1b sind die Ergebnisse graphisch dargestellt. Eine deutliche Abtrennung der beiden Phenolsäuren Chlorogensäure und Kaffeesäure war bei beiden pH-Werten möglich. Bei pH 8 konnte stets ein höherer Anteil der Phenolsäuren als bei pH 6 abgetrennt werden. Allerdings wäre es auch denkbar, dass bei pH 8 bereits ein Teil der Chlorogen- und Kaffeesäure oxidiert wurde und daher ein geringrer Gehalt gemessen wurde. Da diese Oxidationsreaktion aus sensorischen Gründen unerwünscht ist, ist eine Behandlung bei niedrigeren pH-Werten vorzuziehen.

### Beispiel 5: Abtrennung von Sinapin und Sinapinsäure aus Rapsproteinextrakt

Für die Versuche wurde ein Extrakt aus entöltem Rapsschrot eingesetzt, das wie oben beschrieben hergestellt wurde.

Die Gehalte der Pflanzenproteinextrakte an Sinapin und Sinapinsäure wurden mittels HPLC bestimmt. Hierzu wurde vorher eine Kalibrierung mit Sinapin und Sinapinsäure durchgeführt (s. Methodenteil).

### Ergebnisse

Die Proteinextraktion wurde bei pH 7,4 durchgeführt. Der Proteinextrakt wurde bezogen auf den Pflanzenproteinextrakt mit 1 Gew.-% des jeweiligen anorganischen Adsorbermaterials in drei Stufen behandelt.

Durch den ersten Adsorptionsschritt wurde Sinapin von Tonmineral 4 und Tonmineral 2 bereits vollständig abgetrennt. Bei Verwendung von Hydrotalcit 1 war eine vollständige Entfernung erst durch drei Adsorptionsschritte möglich. Allerdings wurde dabei auch das Protein fast vollständig abgetrennt.

Eine unerwünschte Abtrennung von Protein fand bei einem einzelnen Adsorptionsschritt nur in geringem Maße statt. Lediglich bei Tonmineral 2 wurden Proteine auf unter 60 % abgetrennt.

Durch Tonmineral 4 wird durch einen Adsorptionsschritt eine Abreicherung der Sinapinsäure auf 74 % möglich. Die beiden anderen Adsorber konnten nur in etwa 10 % entfernen [s.a. Fig. 2a - 2c].

**Tabelle 6: Gehalte an Sinapin und Sinapinsäure in einem Rapsproteinextrakt vor und nach Behandlung mit anorganischen Adsorbermaterialien**

| Anorganisches Adsorbermaterial | Probe | Sinapin | Sinapinsäure | Protein |
|---|---|---|---|---|
| | | Konz [µg/ml] | Konz [µg/ml] | Konz [mg/ml] |
| | Extrakt | 258 | 189 | 17 |
| Tonmineral 4 | 1. Stufe | n.n. | 139 | 12,6 |
| | 2. Stufe | n.n. | 110 | 10,8 |
| | 3. Stufe | 51 | 133 | 9,2 |
| Tonmineral 2 | 1. Stufe | n.n. | 174 | 9,9 |
| | 2. Stufe | n.n. | 148 | 9,9 |
| | 3. Stufe | n.n. | 98 | 3,7 |
| Hydrotalcit 1 | 1. Stufe | 183 | 175 | 15,54 |
| | 2. Stufe | 96 | 153 | 13,2 |
| | 3. Stufe | n.n. | 127 | 2,1 |

| | | | | |
|---|---|---|---|---|
| n.n. = nicht nachweisbar | | | | |

Die Ergebnisse zeigen die gute Eignung von smektitischen Tonen und / oder kerolithhaltigen Tonen zur Abtrennung von Sinapin. Wie die Daten zeigen, sind dabei für den Prozess die weniger geladenen Tone (Saponit, Kerolith) besser geeignet, weil damit die Proteinkonzentration weniger verringert wird. Dies kann möglicherweise dadurch erklärt werden, dass die Proteine über eine Ladungswechselwirkung (Kationenaustausch) wechselseitig gebunden werden. Diese wäre für Tonmineral 2 größer als für Tonmineral 4 und Tonmineral 3.

### Beispiel 6: Behandlung von Proteinextrakten aus Rapsschrot mit verschiedenen Adsorbermaterialien

In einer weiteren Versuchsreihe wurde die Entfernung von Sinapin aus einem durch Extraktion von entöltem Rapsschrot erhaltenen Pflanzenproteinextrakt durch Adsorption an anorganische Adsorbermaterialien untersucht und mit der Adsorption an Aktivkohle sowie Amberlit^{®} XAD 4-Ionenaustauscherharz verglichen. Amberlit^{®} XAD 4 wurden von Sigma Aldrich Chemie GmbH, D-82018 Taufkirchen bezogen, die Aktivkohle (gekörnt, ca. 2,5 mm) war von Merck, Darmstadt. Amberlit^{®} XAD 4 ist ein nichtionisches Polymeradsorberharz basierend auf Polystyrol, welches laut Herstellerangaben eine BET-Oberfläche von 725 m²/g aufweist.

Der Pflanzenproteinextrakt wurde jeweils mit 5 % Adsorbens versetzt, 20 min gerührt und dann bei 3000 g während 5 min zentrifugiert. Der Überstand wurde HPLC-analytisch untersucht. Die Sinapingehalte des Überstandes nach Adsorbensbehandlung wurden auf den Leerwert, d.h. den Sinapingehalt des ursprünglichen Extraktes normiert.

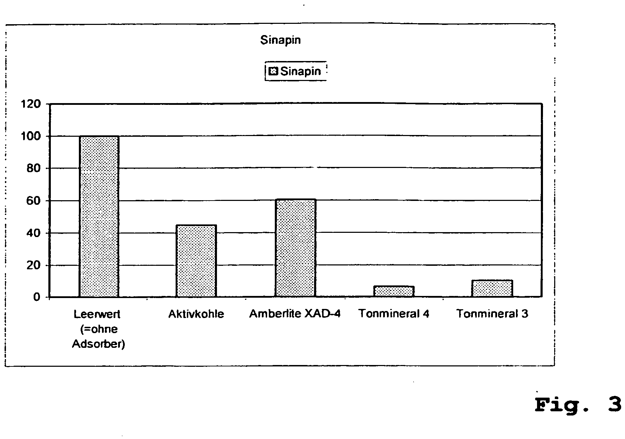

Die Ergebnisse sind in Tabelle 7 zusammengefasst. Die Ergebnisse sind in Fig. 3 graphisch wiedergegeben.

Sowohl aus Tabelle 7 als auch aus Fig. 3 ergibt sich, dass alle Adsorbentien bei einer Dosierung von 5 % den Gehalt an Sinapin im Pflanzenproteinextrakt verringern können. Vergleicht man die Daten, zeigt sich jedoch, dass die beiden Tonminerale (kerolithhaltiger Ton sowie Saponit) den Sinapingehalt des Proteinextraktes deutlich stärker reduzieren als Aktivkohle und Amberlit^{®} XAD 4, die man nach dem Stand der Technik üblicherweise einsetzen würde.

**Tabelle 7: Verringerung des Sinapingehaltes in einem Rapsproteinextrakt durch Behandlung mit verschiedenen Adsorbermaterialien**

| | |
|---|---|
| Leerwert (=ohne Adsorber) | 100 |
| Aktivkohle | 44,9 |
| Amberlite XAD-4 | 60,4 |
| Tonmineral 4 | 6,6 |
| Tonmineral 3 | 10,4 |
| Leerwert (=ohne Adsorber) | 100 |

### Beispiel 7: Fehlaromenentfernung aus Sojaproteinextrakt

### Durchführung

Um Pflanzenproteinkonzentrate mit reduziertem Leguminosengeschmack zu gewinnen, wurden die aus den pflanzlichen Rohstoffen gewonnenen Proteinextrakte durch einen Adsorptionsschritt weiter aufgereinigt.

Mehrere Adsorber (hydrophob, anionisch, kationisch) wurden Proteinextrakten aus Soja oder Erbse bei verschiedenen pH-Werte zugesetzt. Nach einer vorher festgelegten Inkubationszeit wurde der Adsorber abgetrennt und die Extrakte sensorisch im Vergleich zu Kontroll-Extrakten beurteilt. Außerdem wurde der Proteingehalt im Extrakt bestimmt, um festzustellen, ob unter den jeweiligen Bedingungen auch die Proteine adsorptiv ausgefällt werden. Die Proteine wurden mittels photometrische Messung nach Biuret-Reaktion analysiert.

Zur Herstellung der Proteinextrakte wurde teilweise vor der eigentlichen Proteinextraktion eine saure Vorextraktion durchgeführt.

Die erhaltenen Proteinextrakte wurden direkt sensorisch verkostet. Es wurden dabei die mit Adsorber behandelten Lösungen mit den unbehandelten Extrakten verglichen. Zur sensorischen Bewertung wurde ein so genannter Dreieckstest durchgeführt, in dem jeweils zwei verschiedene Proben (A + B) miteinander verglichen wurden. Dazu bekam jeder Proband einen Probensatz aus 3 Proben (A,A,B oder A,B,B), die mit dreistelligen Zufallszahlen verschlüsselt wurden. Die Tester wussten nicht, welche der Proben doppelt vorhanden war. Durch Vergleich von Geruch und Geschmack sollten die Probanden herausfinden, welche der beiden Proben sich von den anderen unterscheidet und welche Merkmalseigenschaften unterschiedlich sind.

Als Merkmalseigenschaften des Geruchs wurden abgefragt:
grasig/grün
bohnig/erbsig
getreidig
pappig

Als Merkmalseigenschaften des Geschmacks wurden abgefragt:
bitter
grasig/grün
bohnig/erbsig
getreidig
pappig

Bei der Auswertung wurde ermittelt, wie viele der Probanden die abweichende Probe richtig erkannten. Daraus kann abgeleitet werden, mit welcher Wahrscheinlichkeit sich die Proben signifikant unterscheiden. Die Wahrscheinlichkeit, dass ein signifikanter Unterschied zwischen den Proben A und B existiert, kann aus folgender Tabelle abgelesen werden. Es ist dargestellt, wieviele richtige Antworten nötig sind, um ein bestimmtes Signifikanz-Niveau zu erhalten. Ein Unterschied gilt als signifikant, wenn das Signifikanz-Niveau maximal 0,05 beträgt, was einer Irrtumswahrscheinlichkeit von 5% entspricht.

**Tabelle für binominalverteilte Werte zur Dreiecksprüfung**

| Anzahl Prüfer o. Prüfungen | Mindestzahl richtiger Urteile bei einem Signifikanzniveau von | | | | |
|---|---|---|---|---|---|
| | =0,2 (n.s.) | =0,1 (n.s) | =0,05 (s.) | =0,01 (h.s) | =0,001 (s.h.s.) |
| 6 | 4 | 5 | 5 | 6 | - |
| 7 | 4 | 5 | 5 | 6 | 7 |
| 8 | 5 | 5 | 6 | 7 | 8 |
| 9 | 5 | 6 | 6 | 7 | 8 |
| 10 | 6 | 6 | 7 | 8 | 9 |

| | | | | | |
|---|---|---|---|---|---|
| n.s = nicht signifikant s.= signifikant h.s = hoch signifikant s.h.s.= sehr hoch signifikant Literatur: Praxishandbuch Sensorik in der Produktentwicklung und Qualitätssicherung, Busch-Stockfisch, Behr's Verlag | | | | | |

Die Untersuchungen wurden mit 8 - 10 Prüfern durchgeführt.

### Beispiel 8: Fehlaromenentfernung aus Sojaprotein

### Versuch 1: pH 8, ohne Vorextraktion

Zuerst wurde untersucht, inwieweit die Behandlung mit anorganischem Adsorbermaterial die Proteinausbeute verringert.

Hierzu wurde eine Extraktion von Sojaprotein bei pH 8,0 durchgeführt und die Proteinausbeuten mit und ohne Adsorberbehandlung miteinander verglichen. Die Ergebnisse sind in Tabelle 8 wiedergegeben:

**Tabelle 8: Messung der Proteinadsorption bei Behandlung von Sojaproteinextrakten mit anorganischen Adsorbermaterialien**

| Probe | Proteingehalt [mg/ml] |
|---|---|
| ohne Adsorbens-Behandlung | 26,8 |
| Tonmineral 1 | 26 |
| Hydrotalcit 1 | 26,5 |
| Tonmineral 3 | 24,7 |
| Tonmineral 4 | 26 |

Die Adsorber führten zu keiner Ausfällung von Protein und beeinträchtigten daher die Proteinausbeute nicht.

### Versuch 2: pH 7, ohne Vorextraktion

Analog zu Versuch 1 wurde eine Extraktion von Sojaproteinen bei pH 7,0 durchgeführt und die Proteinausbeuten mit und ohne Adsorberbehandlung miteinander verglichen. Die Ergebnisse sind in Tabelle 9 zusammengefasst:

**Tabelle 9: Proteingehalt eines Sojaproteinextrakts vor und nach Behandlung mit verschiedenen anorganischen Adsorbermaterialien**

| Probe | Proteingehalt [mg/ml] |
|---|---|
| Blindwert | 22,9 |
| Tonmineral 1 | 21,6 |
| Hydrotalcit 1 | 22,3 |
| Tonmineral 3 | 20,9 |
| Tonmineral 4 | 21,7 |

Die anorganischen Adsorbermaterialien führten zu keiner Ausfällung von Protein und beeinträchtigten daher die Proteinausbeute nicht. Die Ausbeute ist insgesamt etwas schlechter als bei pH 8, was an der etwas schlechteren Löslichkeit der Proteine bei niedrigeren pH-Werten liegt.

Möglicherweise können Proteinextraktionen bei pH-Werten oberhalb von 8 bereits zu leichter Proteinhydrolyse führen und sind daher nicht so schonend. Daher wurden die folgenden Versuche bei pH-Werten < 8 durchgeführt.

### Versuch 3: pH 7, Vergleich von Produkten mit und ohne Vorextraktion

Es wurden bei pH 7,0 Extraktionen von Sojaprotein durchgeführt, teilweise mit und teilweise ohne Vorextraktion. Die Proteinausbeuten mit und ohne Adsorberbehandlung wurden miteinander verglichen.

Die hergestellten Extrakte wurden sensorisch bewertet. Die Ergebnisse sind Tabelle 10 zu entnehmen.

**Tabelle 10: sensorische Beurteilung von Sojaproteinkonzentraten bei Durchführung einer Vorextraktion**

| Probendreieck (jeweils Adsorber gegen Blindwert) | Abweichende Probe richtig erkannt [%] | Signifikanz | Abweichende Merkmale Geruch* | Abweichende Merkmale Geschmack* | Proteins-Gehalt [mg/ml] |
|---|---|---|---|---|---|
| BW (ohne VE) | | | | | 23,8 |
| BW (mit VE) | | | | | 11,8 |
| Tonmineral 3 (ohne VE) | 62,5 | 0,1 | grasig bohnig getreidig | bitter (grasig) (bohnig) | 22,8 |
| Tonmineral 3 (mit VE) | 80 | 0,01 hoch signifikant | grasig bohnig getreidig | bitter grasig bohnig pappig | 11,3 |
| Tonmineral 4 (ohne VE) | 37,5 | >0,2 | (grasig) | (bitter) (grasig) | 23,8 |
| Tonmineral 4 (mit VE) | 88,8 | 0,001 sehr hoch signifikant | grasig (bohnig) (getreidig) | bitter grasig bohnig pappig | 10 |
| Hydrotalcit 1 (ohne VE) | 62,5 | 0,1 | (grasig) (bohnig) | bitter bohnig (grasig) | 21,9 |
| Hydrotalcit 1 (mit VE) | 33,3 | >0,2 | | (grasig) (pappig) | 11,2 |

| | | | | | |
|---|---|---|---|---|---|
| BW = Blindwert, d.h. Probe ohne Adsorberbehandlung VE = Vorextraktion * Mindestens 3 Probanden benannten diese Eigenschaften. Bei den eingeklammerten Werten benannten 2 Probanden diese Eigenschaft | | | | | |

Durch die Vorextraktion reduziert sich die Proteinausbeute deutlich, da bei der Vorextraktion Proteine verloren gehen. Allerdings ist die sensorische Qualität der Proben und damit die Wertschöpfung der Proteine deutlich besser. Durch die Adsorber-behandlung wurden die Proteinausbeuten nicht wesentlich erniedrigt.

Am besten schnitten die Proben ab, die mit den Adsorbern Tonmineral 3 bzw. Tonmineral 4, jeweils nach Vorextraktion, hergestellt wurden. Mit diesen Materialien konnten alle unerwünschten Geschmackseindrücke (bitter, grasig, bohnig und pappig) reduziert werden. Die Unterschiede dabei waren hoch signifikant bzw. sehr hoch signifikant.

Da die Proben ohne Vorextraktion deutlich schlechter waren, wurden alle weiteren Versuche mit Vorextraktion durchgeführt.

### Versuch 7: pH 7 - Mehrstufige Adsorption

Die Effektivität der Abtrennung von Fehlaromen sollte durch mehrere Adsorptionsschritte gesteigert werden.

Dazu wurden mit einem geeigneten Adsorber mehrere Adsorptionsschritte durchgeführt und die Zwischenstufen und Endstufe bewertet. Es wurde eine saure Vorextraktion und Proteinextraktion bei pH 7,0 durchgeführt.

Die Ergebnisse sind der Tabelle 11 zu entnehmen.

**Tabelle 11: Sensorische Beurteilung von Sojaproteinextrakten nach mehrstufiger Extraktion des Pflanzenproteins bei pH = 7**

| Probendreieck (jeweils Adsorber gegen Blindwert) | Abweichende probe richtig erkannt [%] | Signifikanz | Abweichende Merkmale Geruch* | Abweichende Merkmale Geschmack* | Proteins-Gehalt [mg/ml] |
|---|---|---|---|---|---|
| BW | | | | | 13,8 |
| Tonmineral 3 einstufig | 33 | >0,2 | (bohnig/erbsig) | - | 11,6 |
| Tonmineral 3 zweistufig | | | *nicht getestet* | *nicht getestet* | 11,2 |
| Tonmineral 3 dreistufig | 90 | 0,001 sehr hoch signifikant | grasig/grün bohnig/erbsig getreidig pappig | bitter grasig/grün bohnig getreidig (pappig) | 9,9 |

| | | | | | |
|---|---|---|---|---|---|
| BW = Blindwert, d.h. Probe ohne Adsorberbehandlung * Mindestens 3 Probanden benannten diese Eigenschaften. | | | | | |

Bei den eingeklammerten Werten benannten 2 Probanden diese Eigenschaft

Durch mehrere Adsorptionsstufen konnte die Sensorik deutlich verbessert werden. Bittere, grasige, bohnige und getreidige Aromen wurden verringert. Die Proteinausbeute war nur wenig schlechter. Für einen kommerziellen Einsatz der Proteine ist vor allem der neutralere Geschmack der so erhaltenen Proteine wichtig. Der gefundene Proteinverlust kann dabei in Kauf genommen werden.

### Beispiel 9: Fehlaromenentfernung aus rohem Erbsenprotein

Mit derselben Vorgehensweise wie bei Beispiel 8 wurde die Entfernung von Fehlaromen aus Erbsenproteinextrakten mit anorganischen Adsorbermaterialien untersucht.

Alle Extraktionen wurden mit Vorextraktion durchgeführt, da es sich bei den Versuchen mit Soja gezeigt hatte, dass ohne Vorextraktion die Produkte sensorisch nicht akzeptabel waren. Aufgrund der Erkenntnisse aus den Soja-Versuchen wurden die Proteingehalte für diese orientierenden Versuche nicht systematisch analysiert.

Die sensorische Bewertung wurde als Dreieckstest durchgeführt. Es wurden Proteinextrakte mit und ohne Adsorberbehandlung verkostet. Die abweichende Probe sollte erkannt und die abweichenden Eigenschaften festgelegt werden.

### Versuch 1: pH 8,5

Nach einer sauren Vorextraktion wurden die Proteine bei pH 8,5 extrahiert und anschließend mit dem entsprechenden Adsorber behandelt. Die Proteinausbeuten mit und ohne Adsorberbehandlung wurden miteinander verglichen. Abgesehen von EX M 1840 konnte die Sensorik signifikant verbessert werden. Vor allem bittere, teilweise auch grüne und erbsige Aroma-, Geschmacks- und/oder Farbkomponenten konnten abgetrennt werden. Die Ergebnisse können Tabelle 12 entnommen werden.

**Tabelle 12: sensorische Beurteilung von Erbsenproteinkonzentraten bei Extraktion bei pH 8,5**

| Probendreieck (jeweils Adsorber gegen Blindwert) | Abweichende Probe richtig erkannt [%] | Signifikanz | Abweichende Merkmale Geruch* | Abweichende Merkmale Geschmack* |
|---|---|---|---|---|
| Blindwert | | | | |
| Tonmineral 3 | 75 | 0,05 signifikant | grasig/grün (bohnig/erbsig) | bitter grasig/grün (bohnig/erbsig) |
| Tonmineral 4 | 87,5 | 0,01 hoch signifikant | bohnig/erbsig (grasig/grün) | bitter (grasig/grün) |
| Hydrotalcit 1 | 71,4 | 0,05 signifikant | - | (getreidig) |
| Tonmineral 2 | 85,7 | 0,01 hoch signifikant | grasig/grün bohnig/erbsig getreidig (pappig) | bitter grasig/grün bohnig/erbsig |
| Westmin D 100 | 37,5 | <0,2 | - | - |

| | | | | |
|---|---|---|---|---|
| BW = Blindwert, d.h. Probe ohne Adsorberbehandlung * Mindestens 3 Probanden benannten diese Eigenschaften. Bei den eingeklammerten Werten benannten 2 Probanden diese Eigenschaft Einzelergebnisse siehe Anhang | | | | |

### Versuch 2: pH 7

Nach einer sauren Vorextraktion wurden die Proteine bei pH 7,0 extrahiert und anschließend mit dem entsprechenden Adsorber behandelt. Die Proteinausbeuten mit und ohne Adsorberbehandlung wurden miteinander verglichen. Die Ergebnisse sind in Tabelle 13 zusammengefasst.

**Tabelle 13: Sensorische Beurteilung von Erbsenproteinkonzentrat erhalten nach Extraktion bei pH 7**

| Probendreieck (jeweils Adsorber gegen Blindwert) | Abweichende Probe richtig erkannt [%] | Signifikanz | Abweichende Merkmale Geruch* | Abweichende Merkmale Geschmack* |
|---|---|---|---|---|
| BW | | | | |
| Tonmineral 3 | 86 | 0,01 hoch signifikant | - | bitter |
| Tonmineral 4 | 86 | 0,01 hoch signifikant | Getreidig pappig (bohnig/erbsig) | grasig/grün bohnig/erbsig pappig (bitter) |
| Hydrotalcit 1 | 100 | 0,001 sehr hoch signifikant | (bohnig/erbsig) | bohnig/erbsig (grasig/grün) |
| Tonmineral 2 | 67 | 0,2 | (getreidig) | grasig/grün |
| Westmin D 100 | 67 | 0,2 | - | - |

| | | | | |
|---|---|---|---|---|
| BW = Blindwert, d.h. Probe ohne Adsorberbehandlung * Mindestens 3 Probanden benannten diese Eigenschaften. Bei den eingeklammerten Werten benannten 2 Probanden diese Eigenschaft | | | | |

Der Geschmack der Extrakte konnte durch die Adsorber-Behandlung signifikant verbessert werden. Vor allem eine Behandlung mit Tonmineral 4 und Hydrotalcit 1 konnte unerwünschte Geschmacksausdrücke, wie grasig und erbsig verringern.

## Patentansprüche

1. Verfahren zur Entfernung unerwünschter Begleitstoffe, insbesondere Aromen-, Geschmacks- und/oder Farbkomponenten aus Pflanzenproteinen zumindest umfassend die folgenden Schritte:
i) Extraktion eines pflanzlichen Rohstoffs mit einem Extraktionsmittel, wobei ein Pflanzenproteinextrakt erhalten wird;
ii) Zugabe eines anorganischen Adsorbermaterials zu dem Pflanzenproteinextrakt, wobei unerwünschte Begleitstoffe, insbesondere Aroma-, Geschmacks- und/oder Farbkomponenten an das anorganische Adsorbermaterial gebunden werden, wobei das Adsorbermaterial ausgewählt ist aus Tonen ausgewählt aus der Gruppe bestehend aus anionischen Tonen ausgewählt aus Vermiculiten, kationischen Tonen ausgewählt aus Hydrotalcit, insbesondere synthetischer Hydrotalcit und ungeladenen Tonen ausgewählt aus der Gruppe bestehend aus Kerolith und Mineralien der Talkgruppe wie insbesondere Talk, Chlorit.

2. Verfahren nach Anspruch 1 zusätzlich umfassend einen oder mehrere Schritte ausgewählt aus der Gruppe bestehend aus
i) Abtrennung unlöslicher Bestandteile des pflanzlichen Rohstoffs vom Pflanzenproteinextrakt;
ii) Abtrennung des anorganischen Adsorbermaterials von dem Pflanzenproteinextrakt;
iii) Abtrennung von Pflanzenprotein aus dem Pflanzenproteinextrakt;
iv) Aufschließen des pflanzlichen Rohstoffs, insbesondere durch Schälen, Mahlen und/oder Flockieren;
v) Vorextraktion des pflanzlichen Rohstoffs, bevorzugt einbis sechsmal, besonders bevorzugt ein- bis dreimal,
- bevorzugt in der 5 bis 10-fachen Menge Wasser bei sauren pH-Werten, weiter bevorzugt nahe am isoelektrischen Punkt, besonders bevorzugt bei ph ≤ 5, und/oder
- bevorzugt bei kalten Temperaturen, besonders bevorzugt bei Temperaturen ≤ 10 °C,
- und mechanische Abtrennung des Feststoffes von der flüssigen Phase nach jedem Vorextraktionsschritt;
vi) Abtrennung des anorganischen Adsorbermaterials von dem Pflanzenproteinextrakt und Wiederholung der Zugabe des anorganischen Adsorbermaterials, vorzugsweise ein- bis dreimal;
vii) Neutralisation des ausgefällten Pflanzenproteins;

3. Verfahren nach Anspruch 1 oder 2, wobei
i) der Pflanzenproteinextrakt auf einen pH-Wert im Bereich von 3 - 10, bevorzugt 5 - 9, weiter bevorzugt ≥ 6 und besonders bevorzugt 6 - 8 eingestellt wird; und/oder
ii) die Abtrennung des anorganischen Adsorbermaterials auf mechanischem Wege, insbesondere durch Zentrifugieren oder Filtrieren erfolgt; und/oder
iii) die Konzentration des anorganischen Adsorber-Materials 0,01 - 20 Gew.-%, bevorzugt 0,1 - 10 Gew.-%, weiter bevorzugt 0,5 - 5 Gew.-% beträgt, bezogen auf das Gewicht des eingesetzten pflanzlichen Rohstoffs; und/oder
iv) die Abtrennung des anorganischen Adsorbermaterials auf mechanischem Wege, insbesondere durch Zentrifugieren oder Dekantieren erfolgt; und/oder
v) die Abtrennung des Proteins erfolgt durch
a) Ausfällung des gelösten Proteins aus der Lösung, bevorzugt nahe am isoelektrischen Punkt des Pflanzenproteins, besonders bevorzugt bei einem pH-Wert < 7,
b) Fest-/Flüssig-Trennung des gefällten Proteins vom Überstand,
c) Trocknung des Pflanzenproteinextraktes, bevorzugt Sprühtrocknung.

4. Verfahren nach einem der Ansprüche 1 bis 3, wobei die Zugabe des anorganischen Adsorbermaterials bereits während der Extraktion des pflanzlichen Rohstoffs mit dem Extraktionsmittel und/oder während der Vorextraktion des pflanzlichen Rohstoffs erfolgt.

5. Verfahren nach einem der Ansprüche 1 bis 4, wobei der pflanzliche Rohstoff ausgewählt ist aus der Gruppe bestehend aus Ölsaaten, Pressrückständen der Ölgewinnung, Leguminosen und allen anderen proteinhaltigen pflanzlichen Rohstoffen, bevorzugt ausgewählt ist aus solchen proteinhaltigen pflanzlichen Rohstoffen, deren Proteingehalt ≥ 10%, weiter bevorzugt ≥ 20% und besonders bevorzugt ≥ 30% beträgt, besonders bevorzugt ausgewählt ist aus der Gruppe bestehend aus Samen von Soja, Erbse, Lupine, Raps, Sonnenblume, Bohne und Getreide.

6. Verfahren nach einem der Ansprüche 1 bis 5, wobei die unerwünschten Begleitstoffe, insbesondere Aroma-, Geschmacks- und/oder Farbkomponenten, ausgewählt sind aus der Gruppe der Polyphenole, besonders bevorzugt Hydroxyzimtsäuren, wie insbesondere Kaffeesäure und Sinapinsäure, sowie deren Derivate, wie Sinapin und Chlorogensäure.

7. Verfahren nach einem der Ansprüche 1 bis 6, wobei der Anteil der Tone am anorganischen Adsorbermaterial
i) für Kerolith ≥ 30%, bevorzugt ≥ 40% und besonders bevorzugt ≥ 50% beträgt;
ii) für Vermiculit ≥ 30%, bevorzugt ≥ 40% und besonders bevorzugt ≥ 50% beträgt.

8. Verwendung der in Anspruch 1 definierten Tone zur Entfernung von unerwünschten Begleitstoffen, insbesondere Aroma-, Geschmacks- und/oder Farbkomponenten aus Pflanzenproteinextrakten.

9. Verwendung nach Anspruch 8, wobei die unerwünschten Begleitstsoffe, insbesondere Aroma-, Geschmacks- und/oder Farbkomponenten, ausgewählt sind aus der Gruppe der Polyphenole, bevorzugt aus der Gruppe bestehend aus Polyphenolen, besonders bevorzugt Hydroxyzimtsäuren, wie insbesondere, Kaffeesäure und Sinapinsäure, sowie deren Derivate, wie Sinapin und Chlorogensäure.

10. Verwendung nach Anspruch 9, wobei die unerwünschten Begleitstoffe, insbesondere Aroma-, Geschmacks- und/oder Farbkomponenten, ausgewählt sind aus Hydroxyzimtsäuren und Phenolsäuren, und die Tone ausgewählt sind aus der Gruppe der Hydrotalcite, bevorzugt der Gruppe der synthetischen Hydrotalcite.

## Claims

1. Method for eliminating unwanted accompanying substances, particularly fragrance, flavour and/or colour components, zeifrom vegetable proteins, at least comprising the following steps:
i) extracting a vegetable raw material using an extracting agent, wherein a vegetable protein extract is obtained;
ii) adding an inorganic adsorber material to the vegetable protein extract, wherein unwanted accompanying substances, particularly fragrance, flavour and/or colour components, are bonded to the inorganic adsorber material
whereas the inorganic adsorber material is selected from clays selected from the group consisting of anionic clays selected from vermiculites, cationic clays selected from hydrotalcite, in particular synthetic hydrotalcite and uncharged clays selected from the group consisting of cerolite and minerals of the talc group in particular talc and chlorite.

2. Method according to claim 1, additionally comprising one or more steps selected from the group consisting of
i) separating insoluble constituents of the vegetable raw material from the vegetable protein extract;
ii) separating the inorganic adsorber material from the vegetable protein extract;
iii) separating vegetable protein from the vegetable protein extract;
iv) decomposing the vegetable raw material, in particular by shelling, grinding and/or flaking;
v) pre-extracting the vegetable raw material, preferably one to six times, particularly preferably one to three times,
- preferably in 5 to 10 times the quantity of water at acid pH values, further preferably close to the isoelectric point, particularly preferably at pH ≤ 5, and/or
- preferably at cold temperatures, particularly preferably at temperatures ≤ 10°C,
- and mechanically separating the solid from the liquid phase after each pre-extraction step;
vi) separating the inorganic adsorber material from the vegetable protein extract and repeating the addition of the inorganic adsorber material, preferably one to three times;
vii) neutralizing the precipitated vegetable protein;

3. Method according to claim 1 or 2, wherein
i) the vegetable protein extract is set to a pH in the range of from 3 - 10, preferably 5 - 9, further preferably ≥ 6 and particularly preferably 6 - 8; and/or
ii) the separating of the inorganic adsorber material takes place mechanically, in particular by centrifugation or filtration; and/or
iii) the concentration of the inorganic adsorber material is 0.01 - 20 wt.-%, preferably 0.1 - 10 wt.-%, further preferably 0.5 - 5 wt.-%, relative to the weight of the vegetable raw material used; and/or
iv) the separating-out of the inorganic adsorber material takes place mechanically, in particular by centrifugation or decanting; and/or
v) the separating-out of the protein takes place by
a) precipitation of the dissolved protein out of the solution, preferably close to the isoelectric point of the vegetable protein, particularly preferably at a pH < 7;
b) solid/liquid separation of the precipitated protein from the supernatant;
c) drying of the vegetable protein extract, preferably spray drying.

4. Method according to one of claims 1 to 3, wherein the addition of the inorganic adsorber material already takes place during the extraction of the vegetable raw material with the extracting agent and/or during the pre-extraction of the vegetable raw material.

5. Method according to one of claims 1 to 4, wherein the vegetable raw material is selected from the group consisting of oilseeds, pressing residues of oil production, legumes and all other protein-containing vegetable raw materials, is preferably selected from those protein-containing vegetable raw materials that have a protein content ≥ 10%, further preferably ≥ 20% and particularly preferably ≥ 30%, is particularly preferably selected from the group consisting of seeds of soya, pea, lupin, rapeseed, sunflower, beans and cereals.

6. Method according to one of claims 1 to 5, wherein the unwanted accompanying substances, particularly fragrance, flavour and/or colour components, are selected from the group of polyphenols, particularly preferably hydroxycinnamic acids, such as in particular caffeic acid and sinapinic acid, as well as their derivatives, such as sinapine and chlorogenic acid.

7. Method according to one of claims 1 to 6, wherein the clays contents of the inorganic adsorber material is
i) ≥ 30%, preferably ≥ 40% and particularly preferably ≥ 50%, for cerolite;
ii) ≥ 30%, preferably ≥ 40% and particularly preferably ≥ 50%, for vermiculite.

8. Use of the clays defined in claim 1 for eliminating unwanted accompanying substances, particularly fragrance, flavour and/or colour components, from vegetable protein extracts.

9. Use according to claim 8, wherein the unwanted accompanying substances, particularly fragrance, flavour and/or colour components, are selected from the group of polyphenols, preferably from the group consisting of polyphenols, particularly preferably hydroxycinnamic acids, such as in particular caffeic acid and sinapinic acid, as well as their derivatives, such as sinapine and chlorogenic acid.

10. Use according to claim 9, wherein the unwanted accompanying substances, particularly fragrance, flavour and/or colour components, are selected from hydroxycinnamic acids and phenolic acids, and the clays are selected from the group of hydrotalcites, preferably the group of synthetic hydrotalcites.

## Revendications

1. Procédé d'élimination d'impuretés d'accompagnement indésirables, notamment de composants aromatiques, aromatisants et/ou colorants de protéines végétales comprenant au moins les étapes suivantes :
i) extraction d'une substance brute végétale avec un moyen d'extraction, dans lequel un extrait de protéine végétale est obtenu ;
ii) addition d'un matériau adsorbant inorganique à l'extrait de protéine végétale, dans lequel des impuretés d'accompagnement indésirables, notamment des composants aromatiques, aromatisants et/ou colorants, sont fixées au matériau adsorbant inorganique, dans lequel le matériau adsorbant est sélectionné parmi des argiles sélectionnées parmi le groupe constitué d'argiles anioniques sélectionnées parmi des vermiculites, des argiles cationiques sélectionnées parmi l'hydrotalcite, notamment l'hydrotalcite synthétique, et des argiles non chargées sélectionnées parmi le groupe constitué de la kérolithe et des minéraux du groupe des talcs comme notamment le talc, le chlorite.

2. Procédé selon la revendication 1, comprenant en outre une ou plusieurs étapes sélectionnées parmi le groupe constitué de
i) séparation de constituants insolubles de la substance brute végétale de l'extrait de protéine végétale ;
ii) séparation du matériau adsorbant inorganique de l'extrait de protéine végétale ;
iii) séparation de la protéine végétale de l'extrait de protéine végétale ;
iv) ouverture de la substance brute végétale, notamment par écorçage, broyage et/ou floconnisation ;
v) extraction préalable de la substance brute végétale, de préférence une à six fois, de manière particulièrement préférée une à trois fois,
- de préférence dans la quantité quintuple à décuple d'eau à des pH acides, de manière davantage préférée près du point isoélectrique, de manière particulièrement préférée à un pH ≤ 5, et/ou
- de préférence à des températures froides, de manière particulièrement préférée à des températures ≤ 10°C,
- et séparation mécanique de la substance solide de la phase liquide après chaque étape d'extraction préalable ;
vi) séparation du matériau adsorbant inorganique de l'extrait de protéine végétale et répétition de l'addition du matériau adsorbant inorganique, de préférence une à trois fois ;
vii) neutralisation de la protéine végétale précipitée.

3. Procédé selon la revendication 1 ou 2, dans lequel
i) l'extrait de protéine végétale est réglé à un pH dans la plage de 3 à 10, de préférence 5 à 9, de manière davantage préférée ≥ 6 et de manière particulièrement préférée 6 à 8 ; et/ou
ii) la séparation du matériau adsorbant inorganique s'effectue par voie mécanique, notamment par centrifugation ou filtration ; et/ou
iii) la concentration en le matériau adsorbant inorganique se monte à 0,01 à 20 % en poids, de préférence 0,1 à 10 % en poids, de manière davantage préférée 0,5 à 5 % en poids, par rapport au poids de la substance brute végétale utilisée ; et/ou
iv) la séparation du matériau adsorbant inorganique s'effectue par voie mécanique, notamment par centrifugation ou décantation ; et/ou
v) la séparation de la protéine s'effectue par
a) précipitation de la protéine dissoute de la solution, de préférence près du point isoélectrique de la protéine végétale, de manière particulièrement préférée à un pH < 7,
b) séparation solide/liquide de la protéine précipitée du surnageant,
c) séchage de l'extrait de protéine végétale, de préférence séchage par pulvérisation.

4. Procédé selon l'une quelconque des revendications 1 à 3, dans lequel l'addition du matériau adsorbant inorganique s'effectue dès l'extraction de la substance brute végétale avec le moyen d'extraction et/ou pendant l'extraction préalable de la substance brute végétale.

5. Procédé selon l'une quelconque des revendications 1 à 4, dans lequel la substance brute végétale est sélectionnée parmi le groupe constitué de semences oléagineuses, tourteaux de l'extraction d'huile, légumineuses et toutes les autres substances brutes végétales protéiques, est de préférence sélectionnée parmi des substances brutes végétales protéiques dont la teneur protéique est ≥ 10 %, de manière davantage préférée ≥ 20 % et de manière particulièrement préférée ≥ 30 %, est de manière particulièrement préférée sélectionnée parmi le groupe constitué de graines comme le soja, le pois, le lupin, le colza, le tournesol, le haricot et les céréales.

6. Procédé selon l'une quelconque des revendications 1 à 5, dans lequel les impuretés d'accompagnement indésirables, notamment les composants aromatiques, aromatisants et/ou colorants, sont sélectionnées parmi le groupe des polyphénols, de manière particulièrement préférée des acides hydroxycinnamiques, comme notamment l'acide caféique et l'acide sinapique, ainsi que de leurs dérivés, comme la sinapine et l'acide chlorogénique.

7. Procédé selon l'une quelconque des revendications 1 à 6, dans lequel la proportion des argiles en matériau adsorbant inorganique
i) se monte pour la kérolithe à ≥ 30 %, de préférence ≥ 40 % et de manière particulièrement préférée ≥ 50 % ;
ii) se monte pour la vermiculite à ≥ 30 %, de préférence ≥ 40 % et de manière particulièrement préférée ≥ 50 %.

8. Utilisation des argiles définies à la revendication 1 pour l'élimination d'impuretés d'accompagnement indésirables, notamment de composants aromatiques, aromatisants et/ou colorants, d'extraits de protéine végétale.

9. Utilisation selon la revendication 8, dans laquelle les impuretés d'accompagnement indésirables, notamment les composants aromatiques, aromatisants et/ou colorants, sont sélectionnées parmi le groupe des polyphénols, de préférence parmi le groupe constitué de polyphénols, de manière particulièrement préférée des acides hydroxycinnamiques, comme notamment l'acide caféique et l'acide sinapique, ainsi que de leurs dérivés, comme la sinapine et l'acide chlorogénique.

10. Utilisation selon la revendication 9, dans laquelle les impuretés d'accompagnement indésirables, notamment les composants aromatiques, aromatisants et/ou colorants, sont sélectionnées parmi des acides hydroxycinnamiques et des acides phénoliques, et les argiles sont sélectionnées parmi le groupe des hydrotalcites, de préférence le groupe des hydrotalcites synthétiques.
